(19) Europäisches Patentamt
European Patent Office
Office européen des brevets

(11) EP 2 545 123 B1

(12) **EUROPÄISCHE PATENTSCHRIFT**

(45) Veröffentlichungstag und Bekanntmachung des Hinweises auf die Patenterteilung:
**16.05.2018 Patentblatt 2018/20**

(21) Anmeldenummer: **11706820.5**

(22) Anmeldetag: **07.03.2011**

(51) Int Cl.:
***C08L 77/00*** *(2006.01)* ***C08K 3/08*** *(2006.01)*
***C08K 3/16*** *(2006.01)* ***C08L 77/06*** *(2006.01)*
***C08G 73/06*** *(2006.01)* ***C08L 61/20*** *(2006.01)*
***C08L 79/04*** *(2006.01)* ***C08L 101/00*** *(2006.01)*

(86) Internationale Anmeldenummer:
**PCT/EP2011/053348**

(87) Internationale Veröffentlichungsnummer:
**WO 2011/110508 (15.09.2011 Gazette 2011/37)**

# (54) WÄRMEALTERUNGSBESTÄNDIGE POLYAMIDE

POLYAMIDES RESISTANT TO HOT AGEING

POLYAMIDES RÉSISTANT AU VIEILLISSEMENT THERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.03.2010 EP 10155927**

(43) Veröffentlichungstag der Anmeldung:
**16.01.2013 Patentblatt 2013/03**

(73) Patentinhaber: **BASF SE**
**67056 Ludwigshafen am Rhein (DE)**

(72) Erfinder:
- **PRUSTY, Manoranjan**
**68167 Mannheim (DE)**
- **PERETOLCHIN, Maxim**
**67466 Lambrecht (DE)**
- **BAUMERT, Martin**
**69221 Dossenheim (DE)**

(56) Entgegenhaltungen:
**EP-A1- 1 479 722**
**EP-A2- 0 045 721**
**WO-A1-03/078526**
**WO-A1-2005/007727**
**WO-A1-2008/071575**
**WO-A1-2008/148766**
**WO-A1-2009/080787**
**WO-A2-2009/077492**
**WO-A2-2009/115535**
**DE-A1- 10 056 398**
**GB-A- 2 325 667**

- **HOELTER D ET AL: "Degree of branching in hyperbranched polymers", ACTA POLYMERICA, VCH, WEINHEIM, DE, Bd. 48, Nr. 1-2, 1. Januar 1997 (1997-01-01), Seiten 30-35, XP002462867, ISSN: 0323-7648, DOI: DOI:10.1002/ACTP.1997.010480105 in der Anmeldung erwähnt**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft thermoplastische Formmassen, enthaltend

A) 10 bis 98 Gew.-% eines thermoplastischen Polyamids,
B) 0,01 bis 20 Gew.-% eines hochverzweigten Melamin-Polymeren oder Melamin-Harnstoff-Polymeren oder deren Mischungen mit einem Verzweigungsgrad von 10 bis 99,9 % und einer Aminzahl (DIN53176) von 100 bis 900 mg KOH/g,
C) bis 70 Gew.-% weitere Zusatzstoffe,

C3) 0,05 bis 3 Gew.-% eines kupferhaltigen Stabilisators als Teil der Komponente C),

wobei die Summe der Gewichtsprozente der Komponenten A) bis C) 100 % ergibt.

Weiterhin betrifft die Erfindung die Verwendung der erfindungsgemäßen Formmassen zur Herstellung von Fasern, Folien und Formkörpern jeglicher Art, sowie die hierbei erhältlichen Formkörper.

Thermoplastische Polyamide wie PA6 und PA66 werden häufig in Form von glasfaserverstärkten Formmassen als Konstruktionswerkstoffe für Bauteile, die während ihrer Lebensdauer erhöhten Temperaturen ausgesetzt sind, eingesetzt, wobei es zu thermooxidativen Schädigungen kommt. Durch Zusatz von bekannten Wärmestabilisatoren kann das Auftreten der thermooxidativen Schädigung zwar hinausgezögert nicht aber dauerhaft verhindert werden, was sich z.B. in einem Abfallen der mechanischen Kennwerte äußert. Die Verbesserung der Wärmealterungsbeständigkeit (WAB) von Polyamiden ist überaus wünschenswert, da dadurch längere Lebenszeiten für thermisch belastete Bauteile erreicht werden können, bzw. deren Ausfallrisiko gesenkt werden kann. Alternativ kann eine verbesserte WAB auch den Einsatz der Bauteile bei höheren Temperaturen ermöglichen.

Der Einsatz von elementarem Eisenpulver in Polyamiden ist aus den WO 2006/074912 und WO 2005/007727 bekannt.

Aus der EP-A 1 846 506 ist eine Kombination von Cu-haltigen Stabilisatoren mit Eisenoxiden für Polyamide bekannt.

Die Wärmealterungsbeständigkeit ist in den bekannten Formmassen, insbesondere über längere thermische Belastungszeiträume, immer noch unzureichend.

Melamin-Polymere bzw. Melamin-Harnstoff-Polymere, welche hochverzweigt sind, werden z.B. nach den Verfahren der WO 2000/17171, WO 2009/080787, WO 2009/27186, WO 2008/148766 und EP-A 240 867 hergestellt.

Diese werden üblicherweise als Haftvermittler, Thixotropieadditive, Rheologieadditive, Oberflächenmodifikatoren und als Bausteine zur Herstellung von Lacken, Überzügen, Klebstoffen, Dichtmassen, Gießelastomeren oder Schaumstoffen eingesetzt.

EP-A 1 479 722 betrifft ein thermoplastisch verformbares Kompositmaterial mit einer aus thermoplastischem Polymerwerkstoff bestehenden Matrix und einem duroplastischen Füllstoff aus zumindest teilweise ausgehärtetem Reaktivharz, wobei der Füllstoff aus nano- bis submikroskaligen Duroplastpartikeln besteht. Für ein vorgehärtetes Melaminharz in Beispiel 12 wird auf DE-A 100 56 398 verwiesen.

DE-A 100 56 398 betrifft aus der Schmelze bearbeitbares Aminoharz auf Basis von 1,3,5-Triazinen und Aldehyden. In Beispiel 1 ist beschrieben, dass Trimethylol-Melamin sauer mit Methanol umgesetzt wird. Das so erhaltende Harz wird im Extruder vorgehärtet, wobei durch die Vorhärtung Dimethylol-Gruppen entfernt beziehungsweise abgespalten werden. Durch die Vorhärtung wird andererseits das Harz nicht ausgehärtet, d. h. es bleibt schmelzbar und löslich. Durch die saure Umsetzung mit Methanol wird eine Veretherung des Aminioharzes durchgeführt.

Der vorliegenden Erfindung lag daher die Aufgabe zugrunde, thermoplastische Polyamidformmassen zur Verfügung zu stellen, welche eine verbesserte WAB und eine gute Oberfläche nach Wärmealterung sowie Mechanik aufweisen.

Demgemäß wurden die eingangs definierten Formmassen gefunden. Bevorzugte Ausführungsformen sind den Unteransprüchen zu entnehmen.

Als Komponente A) enthalten die erfindungsgemäßen Formmassen 10 bis 98, vorzugsweise 20 bis 94,9 und insbesondere 25 bis 89 Gew.-% mindestens eines Polyamides.

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.%-igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid® X17 der BASF SE, ein 1:1 molares Verhältnis von MXDA mit Adipinsäure), Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten (z.B. Ultramid® C31 der BASF SE).

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/6I/MXD6).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

AB-Polymere:

| | |
|---|---|
| PA 4 | Pyrrolidon |
| PA 6 | ε-Caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |

AA/BB-Polymere

| | |
|---|---|
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA MXD6 | m-Xylylendiamin, Adipinsäure |

AA/BB-Polymere

| | |
|---|---|
| PA 61 | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PA PACM 12 | Diaminodicyclohexylmethan, Laurinlactam |
| PA 6I/6T/PACM | wie PA 6I/6T + Diaminodicyclohexylmethan |
| PA 12/MACMI | Laurinlactam, Dimethyl-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure |

Als Komponente B) enthalten die erfindungsgemäßen Formmassen 0,01 bis 20, vorzugsweise 0,1 bis 5 und insbesondere 0,1 bis 2 Gew.-% eines hochverzweigten Melamin-Polymeren oder Melamin-Harnstoff-Polymeren oder deren Mischungen.

Unter hochverzweigten Polymeren B) versteht man im Rahmen der vorliegenden Erfindung Makromoleküle, die sowohl strukturell als auch molekular uneinheitlich sind. Je nach Reaktionsführung können Sie einerseits ausgehend von einem Zentralmolekül analog zu Dendrimeren, jedoch mit uneinheitlicher Kettenlänge der Äste, aufgebaut sein. Andererseits können Sie auch von linearen Molekülen ausgehen und mit verzweigten funktionellen Seitengruppen aufgebaut sein. "Hochverzweigt" bedeutet im Rahmen der vorliegenden Erfindung außerdem, dass der Verzweigungsgrad (Degree of Branching, DB) 10 bis 99,9 %, bevorzugt 20 bis 99 % und insbesondere von 20 bis 95 % beträgt. Unter dem Verzweigungsgrad versteht man die mittlere Anzahl dendritischer Verknüpfungen plus mittlerer Anzahl der Endgruppen pro Molekül, geteilt durch die Summe aus mittlerer Anzahl der dendritischen Verknüpfungen, der mittleren Anzahl der linearen Verknüpfungen und der mittleren Anzahl der Endgruppen, multipliziert mit 100. Unter "dendritisch" wird in diesem Zusammenhang verstanden, dass der Verzweigungsgrad an dieser Stelle im Molekül 99,9 bis 100 % beträgt. Zur Definition des Verzweigungsgrades wird auch auf H. Frey et al., Acta. Polym. 1997, 48, 30, verwiesen.

"Im Wesentlichen nicht vernetzt" oder "unvernetzt" bedeutet im Sinne der vorliegenden Erfindung, dass ein Vernetzungsgrad der Komponente B) von weniger als 15 Gew.-%, vorzugsweise von weniger als 10 Gew.-% vorhanden ist, wobei der Vernetzungsgrad über den unlöslichen Anteil des Polymers bestimmt wird.

Der unlösliche Anteil des Polymeren B) wird beispielsweise durch 4-stündige Extraktion mit dem gleichen Lösungsmittel, wie es für die Gelpermeationschromatographie (GPC) verwendet wird, das heißt vorzugsweise Dimethylacetamid oder Hexafluorisopropanol, je nachdem, in welchem der Lösungsmittel das Polymer B) besser löslich ist, in einer Soxhlet-Apparatur und, nach Trocknung des Rückstands bis zur Gewichtskonstanz, Wägung des verbliebenen Rückstandes, bestimmt.

Die erfindungsgemäßen Polymeren B) weisen ein zahlenmittleres Molekulargewicht $M_n$ von vorzugsweise 1000 bis 40000, besonders bevorzugt von 1500 bis 30000 und insbesondere von 2000 bis 20000 g/mol auf. Das gewichtsmittlere Molekulargewicht $M_w$ beträgt vorzugsweise von 1500 bis 150000, besonders bevorzugt höchstens 100000, stärker bevorzugt höchstens 60000 und insbesondere höchstens 40000. Die Polydispersität (PD = Quotient aus $M_w$ und $M_n$) beträgt vorzugsweise wenigstens 1,1, besonders bevorzugt wenigstens 1,5 und insbesondere wenigstens 2.

Die im Rahmen der vorliegenden Erfindung gemachten Angaben zu Molekulargewichten ($M_n$, $M_w$) und der Polydispersität beziehen sich auf Werte, die sich mit Gelpermeationschromatographie (GPC) in Hexafluorisopropanol als Lösungsmittel mit PMMA-Kalibrierung ergeben.

Die Aminzahl der Komponente B) beträgt vorzugsweise von 200 bis 800 und ganz besonders von 300 bis 700 mg KOH/g (DIN 53176).

Die erfindungsgemäße Komponente B) ist erhältlich gemäß den Verfahren der WO 2009/080787 durch die Umsetzung von

(i) Harnstoff und/oder wenigstens einem Harnstoffderivat;
(ii) Melamin; und
(iii) wenigstens einem Amin, wobei das wenigstens eine Amin

> (iii.1) 20 bis 100 Mol-%, bezogen auf die Gesamtmenge der Komponenten (iii.1), (iii.2) und (iii.3), wenigstens eines Diamins oder Polyamins mit zwei primären Aminogruppen,
> (iii.2) 0 bis 50 Mol-%, bezogen auf die Gesamtmenge der Komponenten (iii.1), (iii.2) und (iii.3), wenigstens eines Polyamins mit wenigstens drei primären Aminogruppen; und
> (iii.3) 0 bis 80 Mol-%, bezogen auf die Gesamtmenge der Komponenten (iii.1), (iii.2) und (iii.3), wenigstens eines Amins mit einer primären Aminogruppe umfasst; und

(iv) gegebenenfalls wenigstens einem Melamin-Derivat, das ausgewählt ist unter Benzoguanamin, substituierten Melaminen und Melamin-Kondensaten.

Werden Melamin-Polymere als Komponente B) eingesetzt, können diese ebenso hergestellt werden, wobei Komponente (i) entbehrlich ist, d.h. die Einsatzstoffe sind identisch jedoch ohne Komponente (i).

Werden keine anderen Angaben gemacht, so gelten im Rahmen der vorliegenden Erfindung folgende allgemeine Definitionen:

$C_1$-$C_4$-Alkyl steht für einen linearen oder verzweigten Alkylrest mit 1 bis 4 Kohlenstoffatomen. Dies sind Methyl, Ethyl, n-Propyl, Isopropyl, n-Butyl, sec-Butyl, Isobutyl und tert-Butyl.

Lineares $C_1$-$C_4$-Alkyl steht für einen linearen Alkylrest mit 1 bis 4 Kohlenstoffatomen. Dies sind Methyl, Ethyl, n-Propyl und n-Butyl.

$C_1$-$C_{12}$-Alkyl steht für einen linearen oder verzweigten Alkylrest mit 1 bis 12 Kohlenstoffatomen. Beispiele hierfür sind Methyl, Ethyl, n-Propyl, Isopropyl, n-Butyl, sec-Butyl, Isobutyl, tert-Butyl, Pentyl, Neopentyl, Hexyl, Heptyl, Octyl, 2-Ethylhexyl, Nonyl, Decyl, 2-Propylheptyl, 4-Methyl-2-propylhexyl, Undecyl, Dodecyl und deren Konstitutionsisomere.

Aryl steht für einen carbocyclischen aromatischen Rest mit 6 bis 14 Kohlenstoffatomen, wie Phenyl, Naphthyl, Anthracenyl oder Phenanthrenyl. Vorzugsweise steht Aryl für Phenyl oder Naphthyl und insbesondere für Phenyl.

Aryl-$C_1$-$C_4$-alkyl steht für $C_1$-$C_4$-Alkyl, das wie oben definiert ist, wobei ein Wasserstoffatom durch eine Arylgruppe ersetzt ist. Beispiele sind Benzyl, Phenethyl und dergleichen.

$C_1$-$C_4$-Alkylen ist ein linearer oder verzweigter zweiwertiger Alkylrest mit 1, 2, 3 oder 4 Kohlenstoffatomen. Beispiele sind $-CH_2-$, $-CH_2CH_2-$, $-CH(CH_3)-$, $-CH_2CH_2CH_2-$, $-CH(CH_3)CH_2-$, $-CH_2CH(CH_3)-$, $-C(CH_3)_2-$, $-CH_2CH_2CH_2CH_2-$, $-CH(CH_3)CH_2CH_2-$, $-CH_2CH_2CH(CH_3)-$, $-C(CH_3)_2CH_2-$, $-CH_2C(CH_3)_2-$ und $-CH_2CH_2CH_2CH_2CH_2-$.

Lineares oder verzweigtes $C_2$-$C_5$-Alkylen ist ein linearer oder verzweigter zweiwertiger Alkylrest mit 2, 3, 4 oder 5 Kohlenstoffatomen. Beispiele sind $-CH_2CH_2-$, $-CH(CH_3)-$, $-CH_2CH_2CH_2-$, $-CH(CH_3)CH_2-$, $-CH_2CH(CH_3)-$, $-C(CH_3)_2-$, $-CH_2CH_2CH_2CH_2-$, $-CH(CH_3)CH_2CH_2-$, $-CH_2CH_2CH(CH_3)-$, $-C(CH_3)_2CH_2-$, $-CH_2C(CH_3)_2-$ und $-CH_2CH_2CH_2CH_2CH_2-$.

Lineares oder verzweigtes $C_4$-$C_8$-Alkylen ist ein linearer oder verzweigter zweiwertiger Alkylrest mit 4 bis 8 Kohlenstoffatomen. Beispiele sind $-CH_2CH_2CH_2CH_2-$, $-CH(CH_3)CH_2CH_2-$, $-CH_2CH_2CH(CH_3)-$, $-C(CH_3)_2CH_2-$, $-CH_2C(CH_3)_2-$, $-CH_2CH_2CH_2CH_2CH_2-$, $-CH_2C(CH_3)_2CH_2-$, $-CH_2CH_2CH_2CH_2CH_2CH_2-$, $-(CH_2)_7-$, $-(CH_2)_8-$ und Stellungsisomere davon.

Lineares oder verzweigtes $C_2$-$C_{10}$-Alkylen ist ein linearer oder verzweigter zweiwertiger Alkylrest mit 2 bis 10 Kohlenstoffatomen. Beispiele sind neben den zuvor bei $C_2$-$C_5$-Alkylen genannten Resten die höheren Homologen mit 6 bis 10 Kohlenstoffatomen, wie Hexylen, Heptylen, Octylen, Nonylen und Decylen.

Lineares oder verzweigtes $C_2$-$C_{20}$-Alkylen ist ein linearer oder verzweigter zweiwertiger Alkylrest mit 2 bis 20 Kohlenstoffatomen. Beispiele sind neben den zuvor bei $C_2$-$C_5$-Alkylen genannten Resten die höheren Homologen mit 6 bis 20 Kohlenstoffatomen, wie Hexylen, Heptylen, Octylen, Nonylen, Decylen, Undecylen, Dodecylen, Tridecylen, Tetradecylen, Pentadecylen, Hexadecylen, Heptadecylen, Octadecylen, Nonadecylen und Eicosylen.

Alkenylen ist ein linearer oder verzweigter aliphatischer ein- oder mehrfach, z.B. ein- oder zweifach, olefinisch ungesättigter zweiwertiger Rest mit beispielsweise 2 bis 20 oder 2 bis 10 oder 4 bis 8 Kohlenstoffatomen. Wenn der Rest mehr als eine Kohlenstoff-Kohlenstoff-Doppelbindung enthält, sind diese vorzugsweise nicht vicinal, d.h. nicht allenisch.

Alkinylen ist ein linearer oder verzweigter aliphatischer zweiwertiger Rest mit beispielsweise 2 bis 20 oder 2 bis 10 oder 4 bis 8 Kohlenstoffatomen, der eine oder mehrere, z.B. 1 oder 2 Kohlenstoff-Kohlenstoff-Dreifachbindungen enthält,.

$C_5$-$C_8$-Cycloalkylen steht für eine zweiwertige monocyclische, gesättigte Kohlenwasserstoffgruppen mit 5 bis 8 Kohlenstoffringgliedern. Beispiele sind Cyclopentan-1,2-diyl, Cyclopentan-1,3-diyl, Cyclohexan-1,2-diyl, Cyclohexan-1,3-diyl, Cyclohexan-1,4-diyl, Cycloheptan-1,2-diyl, Cycloheptan-1,3-diyl, Cycloheptan-1,4-diyl, Cyclooctan-1,2-diyl, Cyclooctan-1,3-diyl, Cyclooctan-1,4-diyl und Cyclooctan-1,5-diyl.

Über N gebundener 5- oder 6-gliedriger ungesättigter nichtaromatischer Heterocyclus, der zusätzlich ein oder zwei weitere Stickstoffatome oder ein weiteres Schwefelatom oder Sauerstoffatom als Ringglied enthalten kann, steht beispielsweise für Pyrrolin-1-yl, Pyrazolin-1-yl, Imidazolin-1-yl, 2,3-Dihydrooxazol-3-yl, 2,3- und 2,5-Dihydroisoxazol-2-yl, 2,3-Dihydrothiazol-3-yl, 2,3- und 2,5-Dihydroisothiazol-2-yl, [1,2,3]-1H-Triazolin-1-yl, [1,2,4]-1H-Triazolin-1-yl, [1,3,4]-1H-Triazolin-1-yl, [1,2,3]-2H-Triazolin-2-yl, 1,2-Dihydropyridin-1-yl, 1,4-Dihydropyridin-1-yl, 1,2,3,4-Tetrahydropyridin-1-yl, 1,2-Dihydropyridazin-1-yl, 1,4-Dihydropyridazin-1-yl, 1,6-Dihydropyridazin-1-yl, 1,2,3,4-Tetrahydropyridazin-1-yl, 1,4,5,6-Tetrahydropyridazin-1-yl, 1,2-Dihydropyrimidin-1-yl, 1,4-Dihydropyrimidin-1-yl, 1,6-Dihydropyrimidin-1-yl, 1,2,3,4-Tetrahydropyrimidin-1-yl, 1,4,5,6-Tetrahydropyrimidin-1-yl, 1,2-Dihydropyrazin-1-yl, 1,4-Dihydropyrazin-1-yl, 1,2,3,4-Tetrahydropyrazin-1-yl,1,4-Oxazin-4-yl, 2,3-Dihydro-1,4-oxazin-4-yl, 2,3,5,6-Tetrahydro-1,4-oxazin-4-yl1,4-Thiazin-4-yl, 2,3-Dihydro-1,4-thiazin-4-yl, 2,3,5,6-Tetrahydro-1,4-thiazin-4-yl, 1,2-Dihydro-1,3,5-triazin-1-yl, 1,2,3,4-Tetrahydro-1,3,5-triazin-1-yl und dergleichen.

Über N gebundener 5- oder 6-gliedriger ungesättigter aromatischer Heterocyclus, der zusätzlich ein weiteres Stickstoffatom als Ringglied enthalten kann, steht beispielsweise für Pyrrol-1-yl, Pyrazol-1-yl, Imidazol-1-yl und Triazol-1-yl.

Unter einer primären Aminogruppe versteht man einen Rest $-NH_2$.

Die nachfolgend gemachten Ausführungen zu bevorzugten Ausgestaltungen des erfindungsgemäßen Verfahrens, insbesondere zu den erfindungsgemäß eingesetzten Monomeren und weiteren Reaktionskomponenten und zu den mit dem Verfahren erhältlichen Polymeren sowie zu deren Verwendung gelten sowohl allein für sich genommen als auch insbesondere in jeder denkbaren Kombination miteinander.

Als Komponente (i) wird üblicherweise Harnstoff- und/oder ein Harnstoffderivat eingesetzt.

Vorzugsweise sind die Harnstoffderivate ausgewählt unter

- substituierten Harnstoffen der Formel $R^1R^2N\text{-}C(=O)\text{-}NR^3R^4$, worin $R^1$, $R^2$, $R^3$ und $R^4$ unabhängig voneinander ausgewählt sind unter Wasserstoff, $C_1$-$C_{12}$-Alkyl, Aryl und Aryl-$C_1$-$C_4$-alkyl,
  oder $R^1$ und $R^2$ und/oder $R^3$ und $R^4$ jeweils gemeinsam für $C_2$-$C_5$-Alkylen stehen, wobei eine Methylengruppe (d.h. eine Gruppe $CH_2$ in der Alkylenkette) gegebenenfalls durch eine Carbonylgruppe ersetzt sein kann,
  oder $R^1$ und $R^3$ gemeinsam für $C_2$-$C_5$-Alkylen stehen, wobei eine Methylengruppe (d.h. eine Gruppe $CH_2$ in der Alkylenkette) gegebenenfalls durch eine Carbonylgruppe ersetzt sein kann,
  oder $R^1$ und $R^2$ und/oder $R^3$ und $R^4$ jeweils gemeinsam mit dem Stickstoffatom, an das sie gebunden sind, einen 5- oder 6-gliedrigen ungesättigten aromatischen
  oder nichtaromatischen Ring bilden, der ein oder zwei weitere Stickstoffatome oder ein Schwefelatom oder Sauerstoffatom als Ringglied enthalten kann (d.h. $R^1$ und $R^2$ bzw. $R^3$ und $R^4$ stehen gemeinsam mit dem Stickstoffatom, an das sie gebunden sind, für einen über N gebundenen 5- oder 6-gliedrigen ungesättigten aromatischen oder nichtaromatischen Ring, der ein oder zwei weitere Stickstoffatome oder ein Schwefelatom oder Sauerstoffatom als Ringglied enthalten kann); wobei wenigstens einer der Reste $R^1$, $R^2$, $R^3$ und $R^4$ nicht für Wasserstoff steht;

- Thioharnstoff;

- substituierten Thioharnstoffen der Formel $R^5R^6N\text{-}C(=S)\text{-}NR^7R^8$, worin $R^5$, $R^6$, $R^7$ und $R^8$ unabhängig voneinander ausgewählt sind unter Wasserstoff, $C_1$-$C_{12}$-Alkyl, Aryl und Aryl-$C_1$-$C_4$-alkyl,
  oder $R^5$ und $R^6$ und/oder $R^7$ und $R^8$ jeweils gemeinsam für $C_2$-$C_5$-Alkylen stehen, wobei eine Methylengruppe (d.h. eine Gruppe $CH_2$ in der Alkylenkette) gegebenenfalls durch eine Carbonylgruppe ersetzt sein kann,
  oder $R^5$ und $R^7$ gemeinsam für $C_2$-$C_5$-Alkylen stehen, wobei eine Methylengruppe (d.h. eine Gruppe $CH_2$ in der Alkylenkette) gegebenenfalls durch eine Carbonylgruppe ersetzt sein kann,
  oder $R^5$ und $R^6$ und/oder $R^7$ und $R^8$ jeweils gemeinsam mit dem Stickstoffatom, an das sie gebunden sind, einen 5- oder 6-gliedrigen ungesättigten aromatischen oder nichtaromatischen Ring bilden, der ein oder zwei weitere Stickstoffatome oder ein Schwefelatom oder Sauerstoffatom als Ringglied enthalten kann (d.h. $R^5$ und $R^6$ bzw. $R^7$ und $R^8$ stehen gemeinsam mit dem Stickstoffatom, an das sie gebunden sind, für einen über N gebundenen 5- oder 6-gliedrigen ungesättigten aromatischen oder nichtaromatischen Ring, der ein oder zwei weitere Stickstoffatome oder ein Schwefelatom oder Sauerstoffatom als Ringglied enthalten kann); wobei wenigstens einer der Reste $R^5$, $R^6$, $R^7$ und $R^8$ nicht für Wasserstoff steht;

- Guanidin;

- substituierten Guanidinen der Formel $R^9R^{10}N\text{-}C(=NR^{11})\text{-}NR^{12}R^{13}$, worin $R^9$, $R^{10}$, $R^{11}$, $R^{12}$ und $R^{13}$ unabhängig voneinander ausgewählt sind unter Wasserstoff, $C_1$-$C_{12}$-Alkyl, Aryl und Aryl-$C_1$-$C_4$-alkyl,
  oder $R^9$ und $R^{10}$ und/oder $R^{12}$ und $R^{13}$ jeweils gemeinsam für $C_2$-$C_5$-Alkylen stehen, wobei eine Methylengruppe (d.h. eine Gruppe $CH_2$ in der Alkylenkette) gegebenenfalls durch eine Carbonylgruppe ersetzt sein kann,
  oder $R^9$ und $R^{12}$ gemeinsam für $C_2$-$C_5$-Alkylen stehen, wobei eine Methylengruppe (d.h. eine Gruppe $CH_2$ in der Alkylenkette) gegebenenfalls durch eine Carbonylgruppe ersetzt sein kann,
  oder $R^9$ und $R^{10}$ und/oder $R^{12}$ und $R^{13}$ jeweils gemeinsam mit dem Stickstoffatom, an das sie gebunden sind, einen 5- oder 6-gliedrigen ungesättigten aromatischen
  oder nichtaromatischen Ring bilden, der zusätzlich ein weiteres Stickstoffatom, Schwefelatom oder Sauerstoffatom als Ringglied enthalten kann (d.h. $R^9$ und $R^{10}$ bzw. $R^{12}$ und $R^{13}$ stehen gemeinsam mit dem Stickstoffatom, an das sie gebunden sind, für einen über N gebundenen 5- oder 6-gliedrigen ungesättigten aromatischen oder nichtaromatischen Ring, der ein oder zwei weitere Stickstoffatome oder ein Schwefelatom oder Sauerstoffatom als Ringglied enthalten kann);
  wobei wenigstens einer der Reste $R^9$, $R^{10}$, $R^{11}$, $R^{12}$ und $R^{13}$ nicht für Wasserstoff steht; und

- Kohlensäureestern der Formel $R^{14}$-O-CO-O-$R^{15}$, worin $R^{14}$ und $R^{15}$ unabhängig voneinander ausgewählt sind unter $C_1$-$C_{12}$-Alkyl, Aryl und Aryl-$C_1$-$C_4$-alkyl oder $R^{14}$ und $R^{15}$ gemeinsam für $C_2$-$C_5$-Alkylen stehen.

Natürlich können auch Gemische verschiedener Harnstoffderivate eingesetzt werden.

In einer bevorzugten Ausführungsform stehen in den substituierten Harnstoffen $R^2$ und $R^4$ für Wasserstoff und $R^1$ und $R^3$ sind gleich oder verschieden und stehen für $C_1$-$C_{12}$-Alkyl, Aryl oder Aryl-$C_1$-$C_4$-Alkyl. Beispiele hierfür sind N,N'-Dimethylharnstoff, N,N'-Diethylharnstoff, N,N'-Dipropylharnstoff, N,N'-Diisopropylharnstoff, N,N'-Di-n-butylharnstoff, N,N'-Diisobutylharnstoff, N,N'-Di-sec-butylharnstoff, N,N'-Di-tert-butylharnstoff, N,N'-Dipentylharnstoff, N,N'-Dihexylharnstoff, N,N'-Diheptylharnstoff, N,N'-Dioctylharnstoff, N,N'-Didecylharnstoff, N,N'-Didodecylharnstoff, N,N'-Diphenylharnstoff, N,N'-Dinaphthylharnstoff, N,N'-Ditolylharnstoff, N,N'-Dibenzylharnstoff, N-Methyl-N'-phenylharnstoff und N-Ethyl-N'-phenylharnstoff.

In einer alternativ bevorzugten Ausführungsform sind $R^1$, $R^2$, $R^3$ und $R^4$ gleich und stehen für lineares $C_1$-$C_4$-Alkyl. Beispiele hierfür sind N,N,N',N'-Tetramethylharnstoff und N,N,N',N'-Tetraethylharnstoff.

In einer alternativ bevorzugten Ausführungsform stehen $R^1$ und $R^2$ sowie $R^3$ und $R^4$ jeweils gemeinsam für $C_2$-$C_5$-Alkylen; das heißt $R^1$ und $R^2$ bilden gemeinsam eine $C_2$-$C_5$-Alkylengruppe und $R^3$ und $R^4$ bilden gemeinsam eine $C_2$-$C_5$-Alkylengruppe. Beispiele hierfür sind Di-(tetrahydro-1H-pyrrol-1-yl)-methanon, Bis(pentamethylen)harnstoff und Carbonylbiscaprolactam.

In einer alternativ bevorzugten Ausführungsform stehen $R^2$ und $R^4$ für Wasserstoff und $R^1$ und $R^3$ bilden gemeinsam eine $C_2$-$C_5$-Alkylengruppe, wobei eine Methylengruppe ggf. durch eine Carbonylgruppe ersetzt sein kann. Beispiele hierfür sind Ethylenharnstoff sowie 1,2- oder 1,3-Propylenharnstoff.

In einer alternativ bevorzugten Ausführungsform bilden $R^1$ und $R^2$ sowie $R^3$ und $R^4$ jeweils gemeinsam mit dem Stickstoffatom, an das sie gebunden sind, einen wie oben definierten ungesättigten aromatischen oder nicht aromatischen Heterocyclus. Beispiele hierfür sind Carbonyldipyrazol und Carbonyldiimidazol.

In einer bevorzugten Ausführungsform stehen in den substituierten Thioharnstoffen $R^6$ und $R^8$ für Wasserstoff und $R^5$ und $R^7$ sind gleich oder verschieden und stehen für $C_1$-$C_{12}$-Alkyl, Aryl oder Aryl-$C_1$-$C_4$-Alkyl. Beispiele hierfür sind N,N'-Dimethylthioharnstoff, N,N'-Diethylthioharnstoff, N,N'-Dipropylthioharnstoff, N,N'-Diisopropylthioharnstoff, N,N'-Di-n-butylthioharnstoff, N,N'-Diisobutylthioharnstoff, N,N'-Di-sec-butylthioharnstoff, N,N'-Di-tert-butylthioharnstoff, N,N'-Dipentylthioharnstoff, N,N'-Dihexylthioharnstoff, N,N'-Diheptylthioharnstoff, N,N'-Dioctylthioharnstoff, N,N'-Didecylthioharnstoff, N,N'-Didodecylthioharnstoff, N,N'-Diphenylthioharnstoff, N,N'-Dinaphthylthioharnstoff, N,N'-Ditolylthioharnstoff, N,N'-Dibenzylthioharnstoff, N-Methyl-N'-phenylthioharnstoff und N-Ethyl-N'-phenylthioharnstoff.

In einer alternativ bevorzugten Ausführungsform sind $R^5$, $R^6$, $R^7$ und $R^8$ gleich und stehen für lineares $C_1$-$C_4$-Alkyl. Beispiele hierfür sind N,N,N',N'-Tetramethylthioharnstoff und N,N,N',N'-Tetraethylthioharnstoff.

In einer alternativ bevorzugten Ausführungsform stehen $R^5$ und $R^6$ sowie $R^7$ und $R^8$ jeweils gemeinsam für $C_2$-$C_5$-Alkylen; das heißt $R^5$ und $R^6$ bilden gemeinsam eine $C_2$-$C_5$-Alkylengruppe und $R^7$ und $R^8$ bilden gemeinsam eine $C_2$-$C_5$-Alkylengruppe. Beispiele hierfür sind Di-(tetrahydro-1H-pyrrol-1-yl)-methanthion, Bis(pentamethylen)thioharnstoff und Thiocarbonylbiscaprolactam.

In einer alternativ bevorzugten Ausführungsform stehen $R^6$ und $R^8$ für Wasserstoff und $R^5$ und $R^7$ bilden gemeinsam eine $C_2$-$C_5$-Alkylengruppe, wobei eine Methylengruppe ggf. durch eine Thiocarbonylgruppe ersetzt sein kann. Beispiele hierfür sind Ethylenthioharnstoff sowie 1,2- oder 1,3-Propylenthioharnstoff.

In einer alternativ bevorzugten Ausführungsform bilden $R^5$ und $R^6$ sowie $R^7$ und $R^8$ jeweils gemeinsam mit dem Stickstoffatom, an das sie gebunden sind, einen wie oben definierten ungesättigten aromatischen oder nicht aromatischen Heterocyclus. Beispiele hierfür sind Thiocarbonyldipyrazol und Thiocarbonyldiimidazol.

In einer bevorzugten Ausführungsform stehen in den substituierten Guanidinen $R^{10}$ und $R^{13}$ für Wasserstoff und $R^9$ und $R^{12}$ sind gleich oder verschieden und stehen für $C_1$-$C_{12}$-Alkyl, Aryl oder Aryl-$C_1$-$C_4$-Alkyl. Beispiele hierfür sind N,N'-Dimethylguanidin, N,N'-Diethylguanidin, N,N'-Dipropylguanidin, N,N'-Diisopropylguanidin, N,N'-Di-n-butyl-guanidin, N,N'-Diisobutylguanidin, N,N'-Di-sec-butylguanidin, N,N'-Di-tert-butylguanidin, N,N'-Dipentylguanidin, N,N'-Dihexylguanidin, N,N'-Diheptylguanidin, N,N'-Dioctyl-guanidin, N,N'-Didecylguanidin, N,N'-Didodecylguanidin, N,N'-Diphenylguanidin, N,N'-Dinaphthylguanidin, N,N'-Ditolylguanidin, N,N'-Dibenzylguanidin, N-Methyl-N'-phenylguanidin und N-Ethyl-N'-phenylguanidin.

In einer alternativ bevorzugten Ausführungsform sind $R^9$, $R^{10}$, $R^{12}$ und $R^{13}$ gleich und stehen für lineares $C_1$-$C_4$-Alkyl. Beispiele hierfür sind N,N,N',N'-Tetramethylguanidin und N,N,N',N'-Tetraethylguanidin.

In einer alternativ bevorzugten Ausführungsform stehen $R^9$ und $R^{10}$ sowie $R^{12}$ und $R^{13}$ jeweils gemeinsam für $C_2$-$C_5$-Alkylen; das heißt $R^9$ und $R^{10}$ bilden gemeinsam eine $C_2$-$C_5$-Alkylengruppe und $R^{12}$ und $R^{13}$ bilden gemeinsam eine $C_2$-$C_5$-Alkylengruppe. Beispiele hierfür sind Di-(tetrahydro-1H-pyrrol-1-yl)-imin, Bis(pentamethylen)guanidin und Iminobiscaprolactam.

In einer alternativ bevorzugten Ausführungsform stehen $R^{10}$ und $R^{13}$ für Wasserstoff und $R^9$ und $R^{12}$ bilden gemeinsam eine $C_2$-$C_5$-Alkylengruppe, wobei eine Methylengruppe ggf. durch eine Carbonylgruppe ersetzt sein kann. Beispiele hierfür sind E-thylenguanidin sowie 1,2- oder 1,3-Propylenguanidin.

In einer alternativ bevorzugten Ausführungsform bilden $R^9$ und $R^{10}$ sowie $R^{12}$ und $R^{13}$ jeweils gemeinsam mit dem Stickstoffatom, an das sie gebunden sind, einen wie oben definierten ungesättigten aromatischen oder nicht aromatischen Heterocyclus. Beispiele hierfür sind Iminodipyrazol und Iminodiimidazol.

In einer bevorzugten Ausführungsform stehen $R^{14}$ und $R^{15}$ für $C_1$-$C_4$-Alkyl. Besonders bevorzugt sind beide Reste gleich. Beispiele hierfür sind Dimethylcarbonat, Diethylcarbonat, Dipropylcarbonat, Diisopropylcarbonat, Di-n-butylcarbonat, Di-sec-butylcarbonat, Diisobutylcarbonat und Di-tert-butylcarbonat. Bevorzugt sind hierunter Dimethylcarbonat und Diethylcarbonat.

In einer alternativ bevorzugten Ausführungsform stehen $R^{14}$ und $R^{15}$ gemeinsam für $C_2$-$C_5$-Alkylen und vorzugsweise für $C_2$-$C_3$-Alkylen. Beispiele für solche Carbonate sind Ethylencarbonat sowie 1,2- und 1,3-Propylencarbonat.

Unter den oben genannten Harnstoffderivaten sind die substituierten Harnstoffe, Thioharnstoff, die substituierten Thioharnstoffe und die Kohlensäureester bevorzugt. Stärker bevorzugt sind die substituierten Harnstoffe, Thioharnstoff und die Kohlensäureester. Bevorzugt sind hierunter Thioharnstoff, N,N'-Dimethylharnstoff, N,N'-Diethylharnstoff, N,N'-Di-n-butylharnstoff, N,N'-Diisobutylharnstoff, N,N,N',N'-tetramethylharnstoff, Dimethylcarbonat, Diethylcarbonat, Ethylencarbonat und 1,2-Propylencarbonat. Bevorzugt verwendet man als Komponente (i) jedoch Harnstoff selbst, gegebenenfalls in Kombination mit einem der vorgenannten Harnstoffderivate, und insbesondere nur Harnstoff.

Für die Herstellung der Melamin-Polymeren wird Komponente (i) nicht als Ausgangsstoff eingesetzt.

Das wenigstens eine Amin (iii) ist vorzugsweise ausschließlich aus den Komponenten (iii.1), (iii.2) und (iii.3) aufgebaut; das heißt die Anteile dieser drei Komponenten addieren sich zu 100 Mol-% Komponente(iii).

Die Komponente (iii.1) wird vorzugsweise in einer Menge von 30 bis 100 Mol-%, besonders bevorzugt von 50 bis 100 Mol-% und insbesondere von 75 bis 100 Mol-%, bezogen auf die Gesamtmenge der Komponenten (iii.1), (iii.2) und (iii.3), eingesetzt.

Die Komponente (iii.2) wird in einer Menge von vorzugsweise 0 bis 40 Mol-%, besonders bevorzugt 0 bis 30 Mol-% und insbesondere von 0 bis 15 Mol-%, bezogen auf die Gesamtmenge der Komponenten (iii.1), (iii.2) und (iii.3), eingesetzt.

Die Komponente (iii.3) wird in einer Menge von vorzugsweise 0 bis 70 Mol-%, besonders bevorzugt von 0 bis 50 Mol-% und insbesondere von 0 bis 25 Mol-%, bezogen auf die Gesamtmenge der Komponenten (iii.1), (iii.2) und (iii.3), eingesetzt.

Wenn Komponente (iii.2) eingesetzt wird, so beträgt ihre Einsatzmenge vorzugsweise 1 bis 50 Mol-%, z.B. 5 bis 50 Mol-% oder 10 bis 50 Mol-%, besonders bevorzugt 1 bis 40 Mol-%, z.B. 5 bis 40 Mol-% oder 10 bis 40 Mol-%, stärker bevorzugt 1 bis 30 Mol-%, z.B. 5 bis 30 Mol-% oder 10 bis 30 Mol-%, und insbesondere 1 bis 15 Mol-%, z.B. 2 bis 15 Mol-% oder 5 bis 15 Mol-%, bezogen auf die Gesamtmenge der Komponenten (iii.1), (iii.2) und (iii.3).

Wenn Komponente (iii.3) eingesetzt wird, beträgt ihre Einsatzmenge vorzugsweise 1 bis 80 Mol-%, z.B. 5 bis 80 Mol-% oder 10 bis 80 Mol-%, besonders bevorzugt 1 bis 70 Mol-%, z.B. 5 bis 70 Mol-% oder 10 bis 70 Mol-%, stärker bevorzugt 1 bis 50 Mol-%, z.B. 5 bis 50 Mol-% oder 10 bis 50 Mol-%, und insbesondere 1 bis 25 Mol-%, z.B. 5 bis 25 Mol-% oder 10 bis 25 Mol-%, bezogen auf die Gesamtmenge der Komponenten (iii.1), (iii.2) und (iii.3).

Komponente (iii.1) enthält exakt zwei primäre Aminogruppen ($-NH_2$).

Wenn es sich bei der Komponente (iii.1) um ein Polyamin handelt, so enthält dieses zwei primäre Aminogruppen ($-NH_2$) und außerdem eine oder mehrere sekundäre (-NHR; R ungleich H) und/oder tertiäre (-NRR'; R und R' ungleich H) Aminogruppen, z.B. 1 bis 20 oder 1 bis 10 oder 1 bis 4 sekundäre und/oder tertiäre Aminogruppen.

Handelt es sich bei der Komponente (iii.1) um ein Diamin, so enthält dieses außer den zwei primären Aminogruppen keine weiteren Aminofunktionen.

Das Di- oder Polyamin der Komponente (iii.1) ist vorzugsweise ausgewählt unter Aminen der Formel

$$NH_2\text{-}A\text{-}NH_2$$

worin

A für einen zweiwertigen aliphatischen, alicyclischen, aliphatisch-alicyclischen, aromatischen oder araliphatischen Rest steht, wobei die vorgenannten Reste auch durch eine Carbonylgruppe oder durch eine Sulfongruppe unterbrochen sein können und/oder durch 1, 2, 3 oder 4 Reste substituiert sein können, die ausgewählt sind unter $C_1$-$C_4$-Alkyl; oder für einen zweiwertigen Rest der Formel

$$-[B\text{-}X\text{-}B]_a$$

steht; worin
X für O oder $NR^a$ steht, worin $R^a$ für H, $C_1$-$C_4$-Alkyl, $C_2$-$C_4$-Hydroxyalkyl oder $C_1$-$C_4$-Alkoxy steht;
B für $C_2$-$C_6$-Alkylen steht; und
a für eine Zahl von 1 bis 20 steht.

Geeignet sind auch Gemische dieser Amine.

Zweiwertige aliphatische Reste sind solche, die keine cycloaliphatischen, aromatischen oder heterocyclischen Bestandteile enthalten. Beispiele sind Alkylen-, Alkenylen- und Alkinylen-Reste.

Zweiwertige alicyclische Reste können einen oder mehrere, z.B. einen oder zwei alicyclische Reste enthalten; sie enthalten jedoch keine aromatischen oder heterocyclischen Bestandteile. Die alicyclischen Reste können durch aliphatische Reste substituiert sein, wobei sich aber beide Bindungsstellen für die $NH_2$-Gruppen am alicyclischen Rest befinden.

Zweiwertige aliphatisch-alicyclische Reste enthalten sowohl wenigstens einen zweiwertigen aliphatischen als auch wenigstens einen zweiwertigen alicyclischen Rest, wobei sich die zwei Bindungsstellen für die $NH_2$-Gruppen entweder beide an dem/den alicyclischen Rest(en) oder beide an dem/den aliphatischen Rest(en) oder eine an einem aliphatischen und die andere an einem alicyclischen Rest befinden kann.

Zweiwertige aromatische Reste können einen oder mehrere, z.B. einen oder zwei aromatische Reste enthalten; sie enthalten jedoch keine alicyclischen oder heterocyclischen Bestandteile. Die aromatischen Reste können durch aliphatische Reste substituiert sein, wobei sich aber beide Bindungsstellen für die $NH_2$-Gruppen am aromatischen Rest befinden.

Zweiwertige araliphatische Reste enthalten sowohl wenigstens einen zweiwertigen aliphatischen als auch wenigstens einen zweiwertigen aromatischen Rest, wobei sich die zwei Bindungsstellen für die $NH_2$-Gruppen entweder beide an dem/den aromatischen Rest(en) oder beide an dem/den aliphatischen Rest(en) oder eine an einem aliphatischen und die andere an einem aromatischen Rest befinden kann.

In einer bevorzugten Ausführungsform ist der zweiwertige aliphatische Rest A lineares oder verzweigtes $C_2$-$C_{20}$-Alkylen, besonders bevorzugt lineares oder verzweigtes $C_2$-$C_{10}$-Alkylen und insbesondere lineares oder verzweigtes $C_4$-$C_8$-Alkylen.

Beispiele für geeignete Amine, in denen der Rest A diese Bedeutung ($C_2$-$C_{20}$-Alkylen) hat, sind 1,2-Ethylendiamin, 1,2- und 1,3-Propylendiamin, 2,2-Dimethyl-1,3-propandiamin, 1,4-Butylendiamin, 1,5-Pentylendiamin, Hexamethylendiamin, Heptamethylendiamin, Octamethylendiamin, Nonamethylendiamin, Decamethylendiamin, Undecamethylendiamin, Dodecamethylendiamin, Tridecamethylendiamin, Tetradecamethylendiamin, Pentadecamethylendiamin, Hexadecamethylendiamin, Heptadecamethylendiamin, Octadecamethylendiamin, Nonadecamethylendiamin, Eicosamethylendiamin, 2-Butyl-2-ethyl-1,5-pentamethylendiamin, 2,2,4- oder 2,4,4-Trimethyl-1,6-hexamethylendiamin, 1,5-Diamino-2-methylpentan, 1,4-Diamino-4-methylpentan und dergleichen.

Bevorzugt sind hierunter Amine, in denen A für lineares oder verzweigtes $C_2$-$C_{10}$-Alkylen steht, wie in 1,2-Ethylendiamin, 1,2- und 1,3-Propylendiamin, 2,2-Dimethyl-1,3-propandiamin, 1,4-Butylendiamin, 1,5-Pentylendiamin, Hexamethylendiamin, Heptamethylendiamin, Octamethylendiamin, Nonamethylendiamin, Decamethylendiamin, 2,2,4- oder 2,4,4-Trimethyl-1,6-hexamethylendiamin, 1,5-Diamino-2-methylpentan, 1,4-Diamino-4-methylpentan und dergleichen.

Besonders bevorzugt sind hierunter Amine, in denen A für lineares oder verzweigtes $C_4$-$C_8$-Alkylen steht, wie in 2,2-Dimethyl-1,3-propandiamin, 1,4-Butylendiamin, 1,5-Pentylendiamin, Hexamethylendiamin, Heptamethylendiamin, Octamethylendiamin, 1,5-Diamino-2-methylpentan, 1,4-Diamino-4-methylpentan und dergleichen. In einer speziellen Ausführungsform setzt man Amine ein, in denen A für lineares oder verzweigtes $C_4$-$C_8$-Alkylen steht, wobei im verzweigten Alkylen von einem Kohlenstoffatom aus höchstens eine Verzweigung ausgeht. Beispiele für solche Amine sind 1,4-Butylendiamin, 1,5-Pentylendiamin, Hexamethylendiamin, Heptamethylendiamin, Octamethylendiamin und 1,5-Diamino-2-methylpentan, d.h. die oben als besonders bevorzugt aufgeführten Amine bis auf 2,2-Dimethyl-1,3-propandiamin und 1,4-Diamino-4-methylpentan. Noch spezieller setzt man Amine ein, in denen A für lineares $C_4$-$C_8$-Alkylen steht, wie 1,4-Butylendiamin, 1,5-Pentylendiamin, Hexamethylendiamin, Heptamethylendiamin und Octamethylendiamin.

In einer bevorzugten Ausführungsform sind die zweiwertigen alicyclischen Reste A ausgewählt unter $C_5$-$C_8$-Cycloalkylen, das 1, 2, 3 oder 4 $C_1$-$C_4$-Alkylreste tragen kann.

Beispiele für geeignete Amine, in denen der Rest A diese Bedeutung hat, sind Cyclopentylendiamin, wie 1,2-Diaminocyclopentan oder 1,3-Diaminocyclopentan, Cyclohexylendiamin, wie 1,2-Diaminocyclohexan, 1,3-Diaminocyclohexan oder 1,4-Diaminocyclohexan, 1-Methyl-2,4-diaminocyclohexan, 1-Methyl-2,6-diaminocyclohexan, Cycloheptylendiamin, wie 1,2-Diaminocycloheptan, 1,3-Diaminocycloheptan oder 1,4-Diaminocycloheptan, und Cyclooctylendiamin, wie 1,2-Diaminocyclooctan, 1,3-Diaminocyclooctan, 1,4-Diaminocyclooctan oder 1,5-Diaminocyclooctan. Die Aminogruppen können cis- oder trans-ständig zueinander stehen.

In einer bevorzugten Ausführungsform sind die zweiwertigen aliphatisch-alicyclischen Reste A ausgewählt unter $C_5$-$C_8$-Cycloalkylen-$C_1$-$C_4$-alkylen, $C_5$-$C_8$-Cycloalkylen-$C_1$-$C_4$-alkylen-$C_5$-$C_8$-cycloalkylen und $C_1$-$C_4$-Alkylen-$C_5$-$C_8$-cycloalkylen-$C_1$-$C_4$-alkylen, wobei die Cycloalkylenreste 1, 2, 3 oder 4 $C_1$-$C_4$-Alkylreste tragen können.

Beispiele für geeignete Amine, in denen der Rest A diese Bedeutung hat, sind Diaminodicyclohexylmethan, Isophorondiamin, Bis(aminomethyl)cyclohexan, wie 1,1-Bis(aminomethyl)cyclohexan, 1,2-Bis(aminomethyl)cyclohexan, 1,3-Bis(aminomethyl)-cyclohexan oder 1,4-Bis(aminomethyl)cyclohexan, 2-Aminopropylcyclohexylamin, 3(4)-Aminomethyl-1-methylcyclohexylamin und dergleichen. Die am alicyclischen Rest gebunden Gruppen können jede beliebige relative Position (cis/trans) zueinander einnehmen.

In einer bevorzugten Ausführungsform sind die zweiwertigen aromatischen Reste A ausgewählt unter Phenylen, Biphenylen, Naphthylen, Phenylen-sulfon-phenylen und Phenylen-carbonyl-phenylen, wobei die Phenylen- und Naphthylenreste 1, 2, 3 oder 4 $C_1$-$C_4$-Alkylreste tragen können.

Beispiele für geeignete Amine, in denen der Rest A diese Bedeutung hat, sind Phenylendiamin, wie o-, m- und p-Phenylendiamin, Toluylendiamin, wie o-, m- und p-Toluylendiamin, Xylylendiamin, Naphthylendiamin, wie 1,2-, 1,3-, 1,4-, 1,5-, 1,8-, 2,3-, 2,6- und 2,7-Naphthylen, Diaminodiphenylsulfon, wie 2,2'-, 3,3'- und 4,4'-Diaminodiphenylsulfon, und Diaminobenzophenon, wie 2,2'-, 3,3'- und 4,4'-Diaminobenzophenon.

In einer bevorzugten Ausführungsform sind die zweiwertigen araliphatischen Reste A ausgewählt unter Phenylen-$C_1$-$C_4$-alkylen und Phenylen-$C_1$-$C_4$-alkylen-phenylen, wobei die Phenylenreste 1, 2, 3 oder 4 $C_1$-$C_4$-Alkylreste tragen können.

Beispiele für geeignete Amine, in denen der Rest A diese Bedeutung hat, sind Diaminodiphenylmethan, wie 2,2'-, 3,3'- und 4,4'-Diaminodiphenylmethan, und dergleichen.

In einer bevorzugten Ausführungsform steht X für O. a steht dabei vorzugsweise für eine Zahl von 2 bis 6.

Beispiele für geeignete Amine, in denen der Rest A diese Bedeutung hat, sind Amin-terminierte Polyoxyalkylenpolyole, beispielsweise Jeff-Amine, wie 4,9-Dioxadodecan-1,12-diamin und 4,7,10-Trioxatridecan-1,13-diamin, oder auch regelmäßigere Amin-terminierte Polyoxyalkylenpolyole, wie Amin-terminierte Polyethylenglykole, Amin-terminierte Polypropylenglykole oder Amin-terminierte Polybutylenglykole. Die drei zuletzt genannten Amine (Amin-terminierte Polyalkylenglykole) weisen vorzugsweise ein Molekulargewicht von 200 bis 3000 g/mol auf.

In einer alternativ bevorzugten Ausführungsform steht X für $NR^a$. $R^a$ steht dabei vorzugsweise für H oder $C_1$-$C_4$-Alkyl, besonders bevorzugt für H oder Methyl und insbesondere für H. B steht dabei insbesondere für $C_2$-$C_3$-Alkylen, wie 1,2-Ethylen, 1,2-Propylen und 1,3-Propylen, und insbesondere für 1,2-Ethylen. a steht vorzugsweise für eine Zahl von 1 bis 10, besonders bevorzugt von 1 bis 6 und insbesondere von 1 bis 4.

Beispiele für geeignete Amine, in denen der Rest A diese Bedeutung hat, sind Diethylentriamin, Triethylentetramin, Tetraethylenpentamin, Pentaethylenhexamin, Hexaethylenheptamin, Heptaethylenoctamin, Octaethylennonamin, höhere Polyimine, Bis(3-aminopropyl)amin, Bis(3-aminopropyl)methylamin und dergleichen.

Bevorzugt setzt man als Komponente (iii.1) wenigstens ein Diamin mit zwei primären Aminogruppen ein. Dementsprechend enthält das wenigstens eine Amin (iii.1) neben den zwei primären Aminofunktionen keine weiteren (primären, sekundären und/oder tertiären) Aminogruppen.

Bevorzugte Diamine mit zwei primären Aminogruppen sind solche der Formel $NH_2$-A-$NH_2$, worin A für einen zweiwertigen aliphatischen, alicyclischen, aliphatisch-alicyclischen, aromatischen oder araliphatischen Rest steht, wobei die vorgenannten Reste auch durch eine Carbonylgruppe oder durch eine Sulfongruppe unterbrochen sein können und/oder durch 1, 2, 3 oder 4 Reste substituiert sein können, die ausgewählt sind unter $C_1$-$C_4$-Alkyl, und wobei die vorgenannten Reste selbstverständlich keine Aminogruppen enthalten; oder für einen zweiwertigen Rest der Formel

$$-[B-X-B]_a$$

steht; worin

X für O steht;

B für $C_2$-$C_6$-Alkylen steht; und

a für eine Zahl von 1 bis 100, bevorzugt 1 bis 80 und insbesondere 1 bis 20 steht.

Auf die vorher gemachten Ausführungen zu geeigneten und bevorzugten aliphatischen, alicyclischen, aliphatisch-alicyclischen, aromatischen oder araliphatischen Resten und zu zweiwertigen Resten der Formel $-[B-X-B]_a$, worin X für O steht, sowie auf die dazugehörenden bevorzugten und geeigneten Amine wird hiermit Bezug genommen.

Besonders bevorzugte Diamine mit zwei primären Aminogruppen sind solche der Formel $NH_2$-A-$NH_2$, worin A für einen zweiwertigen aliphatischen Rest und vorzugsweise für lineares oder verzweigtes $C_2$-$C_{20}$-Alkylen steht. Beispiele für geeignete Amine, in denen der Rest A diese Bedeutung ($C_2$-$C_{20}$-Alkylen) hat, sind 1,2-Ethylendiamin, 1,2- und 1,3-Propylendiamin, 2,2-Dimethyl-1,3-propandiamin, 1,4-Butylendiamin, 1,5-Pentylendiamin, Hexamethylendiamin, Heptamethylendiamin, Octamethylendiamin, Nonamethylendiamin, Decamethylendiamin, Undecamethylendiamin, Dodecamethylendiamin, Tridecamethylendiamin, Tetradecamethylendiamin, Pentadecamethylendiamin, Hexadecamethylendiamin, Heptadecamethylendiamin, Octadecamethylendiamin, Nonadecamethylendiamin, Eicosamethylendiamin, 2-Butyl-2-ethyl-1,5-pentamethylendiamin, 2,2,4- oder 2,4,4-Trimethyl-1,6-hexamethylendiamin, 1,5-Diamino-2-methylpentan, 1,4-Diamino-4-methylpentan und dergleichen.

Besonders bevorzugt steht A in den Diaminen mit zwei primären Aminogruppen für lineares oder verzweigtes $C_2$-$C_{10}$-Alkylen. Beispiele für geeignete Amine, in denen der Rest A diese Bedeutung ($C_2$-$C_{10}$-Alkylen) hat, sind 1,2-Ethylendiamin, 1,2- und 1,3-Propylendiamin, 2,2-Dimethyl-1,3-propandiamin, 1,4-Butylendiamin, 1,5-Pentylendiamin, Hexamethylendiamin, Heptamethylendiamin, Octamethylendiamin, Nonamethylendiamin, Decamethylendiamin, 2,2,4- oder 2,4,4-Trimethyl-1,6-hexamethylendiamin, 1,5-Diamino-2-methylpentan, 1,4-Diamino-4-methylpentan und dergleichen.

Insbesondere steht A in den Diaminen mit zwei primären Aminogruppen für lineares oder verzweigtes $C_4$-$C_8$-Alkylen. Beispiele für geeignete Amine, in denen der Rest A diese Bedeutung ($C_4$-$C_8$-Alkylen) hat, sind 2,2-Dimethyl-1,3-propandiamin, 1,4-Butylendiamin, 1,5-Pentylendiamin, Hexamethylendiamin, Heptamethylendiamin, Octamethylendiamin, 1,5-Diamino-2-methylpentan, 1,4-Diamino-4-methylpentan und dergleichen. In einer speziellen Ausführungsform setzt man Amine ein, in denen A für lineares oder verzweigtes $C_4$-$C_8$-Alkylen steht, wobei im verzweigten Alkylen von einem Kohlenstoffatom aus höchstens eine Verzweigung ausgeht. Beispiele für solche Amine sind 1,4-Butylendiamin, 1,5-Pentylendiamin, Hexamethylendiamin, Heptamethylendiamin, Octamethylendiamin und 1,5-Diamino-2-methylpentan, d.h. die oben als besonders bevorzugt aufgeführten Amine bis auf 2,2-Dimethyl-1,3-propandiamin und 1,4-Diamino-4-methylpentan. Stärker bevorzugt sind hierunter Amine, in denen A für lineares $C_4$-$C_8$-Alkylen steht, wie in 1,4-Butylendiamin, 1,5-Pentylendiamin, Hexamethylendiamin, Heptamethylendiamin und Octamethylendiamin.

Speziell handelt es sich bei dem Diamin mit zwei primären Aminogruppen um Hexamethylendiamin.

In das erfindungsgemäße Verfahren kann außerdem optional ein Polyamin mit wenigstens drei primären Aminogruppen eingesetzt werden (Komponente iii.2).

Diese Komponente (iii.2) enthält drei oder mehr primäre Aminogruppen und kann außerdem auch eine oder mehrere sekundäre und/oder tertiäre Aminogruppen enthalten.

Beispiele für solche Amine sind 3-(2-Aminoethyl)-aminopropylamin, N,N-Bis-(3-aminopropyl)-ethylendiamin, N,N-Bis-(3-aminopropyl)-butandiamin, N,N,N',N'-Tetra-(3-aminopropyl)-ethylendiamin, N,N,N',N'-Tetra-(3-aminopropyl)-butylendiamin, Tris(aminoethyl)amin, Tris(aminopropyl)amin, Tris(aminohexyl)amin, Trisaminohexan, 4-Aminomethyl-1,8-octamethylendiamin, Tris-aminononan oder tri- oder höherfunktionelle Amin-terminierte Polyoxyalkylenpolyole (z.B. Jeffamine, beispielsweise Polyetheramin T403 oder Polyetheramin T5000) mit einem Molekulargewicht von vorzugsweise 300 bis 10.000.

Bevorzugt sind hierunter Tris(aminoethyl)amin, Tris(aminopropyl)amin und Jeffamine, wie Polyetheramin T403 oder Polyetheramin T5000.

Der Einsatz dieser Komponente (iii.2) in das erfindungsgemäße Verfahren ist vor allem dann sinnvoll, wenn ein höherer Verzweigungsgrad der Polymere eingestellt werden soll als mit dem Di- oder Polyamin (iii.1) allein möglich ist, denn Polyamine mit wenigstens drei primären Aminogruppen eröffnen neben dem zwingend eingesetzten Melamin (ii) weitere Verzweigungsmöglichkeiten. Die im Polyamin (iii.1) enthaltenen sekundären und/oder tertiären Aminogruppen sind weniger reaktiv als die primären Aminogruppen und sind unter den Reaktionsbedingungen des erfindungsgemäßen Verfahrens wenn überhaupt, dann meist nur in geringem Umfang in der Lage, eine Kondensation einzugehen und damit eine Verzweigungsstelle zu bilden. Auf jeden Fall sind sie in wesentlich geringerem Umfang als Komponente (iii.2) in der Lage, Verzweigungsstellen zu bilden.

Wenn umgekehrt der Verzweigungsgrad geringer sein soll, bietet es sich an, in das erfindungsgemäße Verfahren wenigstens ein Amin mit einer primären Aminogruppe einzusetzen (Komponenten iii.3).

Bei dieser Komponente handelt es sich um ein Amin mit einer einzigen primären Aminofunktion und gegebenenfalls einer oder mehreren sekundären und/oder tertiären Aminogruppen.

Beispiele für primäre Amine ohne weitere sekundäre/tertiäre Aminofunktionen (primäre Monoamine) sind Verbindungen der Formel $R-NH_2$, worin R für einen aliphatischen, alicyclischen, aliphatisch-alicyclischen, aromatischen oder araliphatischen Rest steht, der selbstverständlich keine Aminogruppen enthält.

Beispiele hierfür sind Methylamin, Ethylamin, Propylamin, Isopropylamin, n-Butylamin, sec-Butylamin, Isobutylamin, tert-Butylamin, Pentylamin, Hexylamin, Ethanolamin, Propanolamin, Isopropanolamin, Pentanolamin, (2-Methoxyethyl)-amin, (2-Ethoxyethyl)-amin, (3-Methoxypropyl)-amin, (3-Ethoxypropyl)-amin, [3-(2-Ethylhexyl)-propyl]-amin, 2-(2-Aminoethoxy)ethanol, Cyclohexylamin, Aminomethylcyclohexan, Anilin, Benzylamin und dergleichen.

Beispiele für primäre Amine mit einer oder mehreren sekundären und/oder tertiären Aminofunktionen (Polyamine mit einer (einzigen) primären Aminogruppe) sind N-Methylethylen-1,2-diamin, N,N-Dimethylethylen-1,2-diamin, N-Ethylethylen-1,2-diamin, N,N-Diethylethylen-1,2-diamin, N-Methylpropylen-1,3-diamin, N,N-Dimethylpropylen-1,3-diamin, N-Ethylpropylen-1,3-diamin, N,N-Diethylpropylen-1,3-diamin, N-Methylbutylen-1,4-diamin, N,N-Dimethylbutylen-1,4-diamin, N-Methylpentylen-1,5-diamin, N,N-Dimethylpentylen-1,5-diamin, N-Methylhexylen-1,6-diamin, N,N-Dimethylhexylen-1,6-diamin, N-Methyl-diethylentriamin, N,N-Dimethyl-diethylentriamin, N-Methyl-triethylentetramin, N,N-Dimethyl-triethylentetramin, N-Methyl-tetraethylenpentamin, N,N-Dimethyl-tetraethylenpentamin, (3-(Methylamino)-propyl)-(3-amino-propyl)-amin, (3-(Dimethylamino)-propyl)-(3-aminopropyl)-amin, (2-Aminoethyl)-ethanolamin, N-(2-Hydroxyethyl)-1,3-propandiamin, N-Methyl-diaminocyclohexan, N,N-Dimethyl-diaminocyclohexan, N-Methylphenylendiamin und dergleichen.

Bevorzugt verwendet man als Komponente (iii.3) primäre Monoamine, d.h. Amine mit einer einzigen primären Aminogruppe und ohne weitere sekundäre oder tertiäre Aminofunktionen.

In einer weiteren Ausführungsform der Erfindung wird in die erfindungsgemäße Komponente B) als weiteres Edukt wenigstens ein Melamin-Derivat eingesetzt (Komponente iv).

Vorzugsweise ist das Melamin-Derivat ausgewählt unter Benzoguanamin, substituierten Melaminen und Melamin-Kondensaten.

Die Melamin-Kondensate sind vorzugsweise ausgewählt unter Melam, Melem, Melon und höheren Kondensaten. Melam (Summenformel $C_6$-$H_9N_{11}$) ist ein dimeres Kondensationsprodukt aus 2,4-Diamino-6-chlor-s-triazin mit Melamin. Melem (Summenformel $C_6H_6M_{10}$) ist das mit drei Aminogruppen substituierte Tri-s-triazin (1,3,4,6,7,9,9b-Heptaazaphenalen). Melon (Summenformel $C_6H_3N_9$) ist ebenfalls ein Heptazin.

Das Molverhältnis von Komponente (i) zu Komponente (ii) beträgt vorzugsweise 50:1 bis 1:50, besonders bevorzugt 10:1 bis 1:10, stärker bevorzugt 8:1 bis 1:8, noch stärker bevorzugt 4:1 bis 1:8, insbesondere 2:1 bis 1:5 und speziell 1:1 bis 1:5.

Das Molverhältnis von Komponente (i) zu Komponente (iii) beträgt vorzugsweise 10:1 bis 1:50, besonders bevorzugt 2:1 bis 1:50, stärker bevorzugt 2:1 bis 1:25, noch stärker bevorzugt 1:1 bis 1:20, insbesondere 1:2,5 bis 1:15 und speziell 1:5 bis 1:15.

Besonders bevorzugt werden die Komponenten (i), (ii) und (iii) in solchen Molverhältnissen eingesetzt, das Folgendes gilt: Das Verhältnis von

$$\left[\frac{\text{Menge Komponente (i) [Mol]}}{2} + \frac{\text{Menge Komponente (ii) [Mol]}}{3}\right] : \text{Menge Komponente (iii) [Mol]}$$

liegt vorzugsweise im Bereich von 0,05:1 bis 0,75:1, besonders bevorzugt von 0,075:1 bis 0,5:1 und insbesondere von 0,1:1 bis 0,4:1.

Dabei liegt das Molverhältnis der Komponenten (i) und (ii) vorzugsweise in den oben angegebenen Bereichen.

Wenn Komponente (iv) eingesetzt wird, so ersetzt es vorzugsweise einen Teil der Komponente (i). Vorzugsweise wird es in solchen Mengen eingesetzt, dass es 1 bis 75 Mol-%, besonders bevorzugt 1 bis 50 Mol-% und insbesondere 1 bis 25 Mol-% der Komponente (i) ersetzt.

Die Umsetzung der Komponenten (i), (ii), (iii) und optional (iv) erfolgt im erfindungsgemäßen Verfahren vorzugsweise in Gegenwart eines sauren Katalysators.

Als saure Katalysatoren sind sowohl Brönsted-Säuren als auch Lewis-Säuren geeignet.

Geeignete Brönsted-Säuren sind sowohl anorganische Säuren, wie beispielsweise Mineralsäuren, z. B. Fluorwasserstoffsäure, Salzsäure, Bromwasserstoffsäure, Salpetersäure, Schwefelsäure, Phosphorsäure oder Amidosulfonsäure, aber auch Ammoniumsalze, wie Ammoniumfluorid, Ammoniumchlorid, Ammoniumbromid oder Ammoniumsulfat, als auch organische Säuren, wie Methansulfonsäure, Essigsäure, Trifluoressigsäure und p-Toluolsulfonsäure.

Geeignete Brönstedsäuren sind auch die Ammoniumsalze von organischen Aminen, wie Ethylamin, Diethylamin, Propylamin, Dipropylamin, Butylamin, Dibutylamin, Anilin, Benzylamin oder Melamin, und auch die Ammoniumsalze von Harnstoff.

Geeignete Lewis-Säuren sind alle Metall- oder Halbmetall-Halogenide, in denen das Metall oder Halbmetall einer Elektronenpaarlücke besitzt. Beispiele hierfür sind $BF_3$, $BCl_3$, $BBr_3$, $AlF_3$, $AlCl_3$, $AlBr_3$, Ethylaluminiumdichlorid, Diethylaluminiumchlorid, $TiF_4$, $TiCl_4$, $TiBr_4$, $VCl_5$, $FeF_3$, $FeCl_3$, $FeBr_3$, $ZnF_2$, $ZnCl_2$, $ZnBr_2$, Cu(I)F, Cu(I)Cl, Cu(I)Br, Cu(II)$F_2$, Cu(II)$Cl_2$, Cu(II)$Br_2$, Sb(III)$F_3$, Sb(V)$F_5$, Sb(III)$Cl_3$, Sb(V)$Cl_5$, Nb(V)$Cl_5$, Sn(II)$F_2$, Sn(II)$Cl_2$, Sn(II)$Br_2$, Sn(IV)$F_4$, Sn(IV)$Cl_4$ und Sn(IV)$Br_4$.

Bevorzugt verwendet man jedoch Brönsted-Säuren. Hierunter bevorzugt sind die anorganischen Säuren und insbesondere die Ammoniumsalze, wie Ammoniumchlorid oder Ammoniumbromid. Speziell verwendet man Ammoniumchlorid.

Die Umsetzung der Komponenten erfolgt vorzugsweise bei erhöhter Temperatur. Vorzugsweise beträgt die Reaktionstemperatur 40 bis 300°C, besonders bevorzugt 100 bis 250°C und insbesondere 150 bis 230°C.

Die Reaktion kann sowohl bei Normaldruck als auch bei erhöhtem Druck durchgeführt werden, z. B. bei einem Druck von 1 bis 20 bar oder 1 bis 15 bar oder 10 bis 15 bar. Dabei wird der Druck häufig ausschließlich durch den im Verlauf der Reaktion bei der Kondensation der Komponenten (i), (ii), (iii) und optional (iv) frei werdenden Ammoniak aufgebaut; das heißt der Druck nimmt mit fortschreitender Reaktion zu und kann dann auf den gewünschten Wert eingestellt werden.

Wenn die Reaktion bei erhöhtem Druck durchgeführt werden soll, kann der Druck jedoch auch über ein Inertgas, z.B. durch Einleiten von Stickstoff, Argon oder Kohlendioxid, vorzugsweise von Stickstoff, aufgebaut werden. Dies bietet sich insbesondere dann an, wenn die Reaktion von Beginn an, d.h. bevor überhaupt ein nennenswerter Druck durch den gebildeten Ammoniak entstehen kann, unter erhöhtem Druck durchgeführt werden soll.

Der Reaktionsdruck wird insbesondere durch die Art der eingesetzten Amine (Komponente iii) vorgegeben.

So kann die Reaktion bei Normaldruck durchgeführt werden, wenn das wenigstens eine eingesetzte Amin einen Siedepunkt hat, der oberhalb der Reaktionstemperatur liegt. Liegt der Siedepunkt hingegen unterhalb der Reaktionstemperatur, so ist es natürlich vorteilhaft, die Umsetzung bei erhöhtem Druck durchzuführen. Aber auch bei Aminen mit einem Siedepunkt oberhalb der Reaktionstemperatur kann es unter Umständen vorteilhaft sein, die Reaktion unter Überdruck durchzuführen, beispielsweise, um eine höhere Reaktionsgeschwindigkeit zu erreichen. Die Druckeinstellung kann so erfolgen, dass man den für die Einstellung des erwünschten Drucks nicht benötigten Ammoniak aus der Reaktionszone ausschleust, beispielsweise durch Hindurchleiten durch ein Überdruckventil, welches auf den entsprechenden Wert eingestellt ist. Bei Verwendung eines Inertgases zum Druckaufbau erfolgt die Einstellung des gewünschten Drucks über übliche Steuereinrichtungen, z.B. über Druckventile.

Die Umsetzung kann gewünschtenfalls in einem geeigneten Lösungsmittel durchgeführt werden. Geeignete Lösungsmittel sind inert, das heißt sie reagieren unter den gegebenen Reaktionsbedingungen nicht mit den Edukten, Zwischenprodukten oder Produkten und werden selbst auch nicht unter den gegebenen Reaktionsbedingungen, beispielsweise durch thermische Zersetzung, abgebaut. Beispiele für geeignete Lösungsmittel sind chlorierte aliphatische oder aromatische Kohlenwasserstoffe, wie Methylenchlorid, Chloroform, Dichlorethan, Trichlorethan, Chlorbenzol, Chlortoluol und o-Dichlorbenzol, offenkettige und cyclische Ether, wie Diethylether, Dipropylether, tert-Butylmethylether, tert-Butylethylether, Tetrahydrofuran und 1,4-Dioxan, polaraprotische Lösungsmittel, wie N,N-Dimethylformamid, N,N-Dimethylacetamid, Dimethylsulfoxid und Acetonitril, und polar-protische Lösungsmittel, z.B. Polyole bzw. Polyetherpolyole, wie Ethylenglykol, Propylenglykol, Diethylenglykol, Triethylenglykol oder Polyethylenglykol. Bevorzugte Lösungsmittel sind die oben genannten Polyole bzw. Polyetherpolyole.

Vorzugsweise wird die Reaktion jedoch in Substanz, das heißt ohne zusätzliches Lösungsmittel, durchgeführt. In diesem Fall dient vorzugsweise das Amin (Komponente iii) als Lösungsmittel, insbesondere, wenn es im Überschuss eingesetzt wird.

Die Umsetzung kann so durchgeführt werden, dass alle Komponenten gemischt und durch Erwärmen auf die gewünschte Reaktionstemperatur zur Reaktion gebracht werden. Alternativ kann auch ein Teil der Komponenten zuerst zugegeben und die restlichen Bestandteile nach und nach zugeführt werden, wobei die Reihenfolge der Zugabe von untergeordneter Bedeutung ist. Da jedoch Melamin in der Regel die am schwersten lösliche Komponente darstellt, hat es sich in der Praxis bewährt, die übrigen Komponenten, das heißt Komponente (i), Komponente (iii), gegebenenfalls Komponente (iv), gegebenenfalls den sauren Katalysator und gegebenenfalls das Lösungsmittel, und eventuell auch einen Teil des Melamins vorzulegen, auf die gewünschte Reaktionstemperatur zu bringen und das restliche Melamin nach und nach kontinuierlich oder portionsweise zuzuführen.

Ebenso hat es sich bewährt, Komponente (i), insbesondere wenn es sich um Harnstoff handelt, nicht vollständig vorzulegen, sondern nach und nach kontinuierlich oder portionsweise zuzuführen.

Vorteilhafterweise erfolgt die Zugabe der einzelnen Reaktanden in einer solchen Weise, dass ihre vollständige Auflösung gewährleistet ist, damit ihre Umsetzung in der Kondensationsreaktion möglichst vollständig ist.

Die Durchführung der Reaktion erfolgt in der Regel in für solche Kondensationsreaktionen übliche Reaktionsgefäße, beispielsweise in heizbaren Rührreaktoren, Druckrührgefäßen oder Rührautoklaven.

Das Reaktionsgemisch wird in der Regel solange reagieren gelassen, bis eine gewünschte maximale Viskosität erreicht ist. Die Viskosität kann durch Probeentnahme und Bestimmung mittels üblicher Verfahren, beispielsweise mit einem Viskosimeter, bestimmt werden; häufig zeigt es sich aber schon optisch im Reaktionsverlauf, wenn die Viskosität stark zunimmt, beispielsweise durch ein Aufschäumen des Reaktionsgemischs.

Vorzugsweise wird die Reaktion dann abgebrochen, wenn das Reaktionsgemisch eine Viskosität von maximal 100.000 mPas, z.B. von 250 bis 100.000 mPas oder von 500 bis 100.000 mPas oder von vorzugsweise 750 bis 100.000 mPas (bei 100°C), besonders bevorzugt von maximal 50.000 mPas, z.B. von 250 bis 50.000 mPas oder von 500 bis 50.000 mPas oder von vorzugsweise 750 bis 50.000 mPas (bei 100°C), und insbesondere von maximal 10.000 mPas, z.B. von 250 bis 10.000 mPas oder von 500 bis 10.000 mPas oder von vorzugsweise 750 bis 10.000 mPas (bei 100°C), hat.

Wenn die Viskosität des Reaktionsgemisches nicht weiter steigen soll, wird die Reaktion abgebrochen.

Die Reaktion wird vorzugsweise durch Temperaturerniedrigung abgebrochen, bevorzugt durch eine Temperaturerniedrigung auf < 100°, z. B. 20 bis < 100°, bevorzugt auf < 50°C, z. B. auf 20 bis < 50°C.

Je nach Anwendungszweck des erhaltenen Polykondensationsprodukts kann es erforderlich oder wünschenswert sein, dass erhaltene Reaktionsgemisch aufzuarbeiten und zu reinigen. Die Aufarbeitung/Reinigung kann mittels üblicher Verfahren erfolgen, beispielsweise durch Desaktivieren oder Entfernen des Katalysators und/oder durch Entfernen von Lösungsmittel und nicht umgesetzten Edukten.

Zum Entfernen des sauren Katalysators kann das erhaltene Reaktionsprodukt beispielsweise mit einer Base, z.B. mit Natronlauge oder Kalilauge, behandelt werden. Die dabei ausfallenden Salze werden vorteilhafterweise anschließend entfernt, beispielsweise durch Filtration. Wenn die Viskosität des Produktes sehr hoch ist, beispielsweise mehr als 5000 mPas (bei 25°C) beträgt, kann diese Aufarbeitung bei erhöhter Temperatur erfolgen, beispielsweise bei wenigstens 50°C oder bei wenigstens 75°C oder bei wenigstens 100°C. Alternativ oder zusätzlich kann die Filtration unter verringertem Druck erfolgen.

Für zahlreiche Anwendungen ist jedoch der Reinheitsgrad der erhaltenen Polykondensate ausreichend, so dass keine weitere Aufarbeitung oder Aufreinigung erfolgen muss und das Produkt seinem weiteren Einsatzzweck direkt zugeführt werden kann.

Die Polymeren B) sind hochverzweigt und im Wesentlichen nicht vernetzt.

Bevorzugte Komponenten B) sind Polymere wie oben beschrieben, welche nachträglich modifiziert werden.

Die Modifizierung kann in Anlehnung an das Verfahren gemäß der EP 09179490.9 erfolgen durch wenigstens eine Verbindung, die mit Aminogruppen eine Kondensations- oder Additionsreaktion eingehen kann, vorzugsweise ausgewählt unter aliphatischen Monocarbonsäuren oder Derivaten davon, Polycarbonsäuren oder Derivaten davon, aliphatischen, cycloaliphatischen oder aromatischen gegebenenfalls verkappten Isocyanaten, aliphatischen Monoaminen, aliphatischen Polyaminen, Amin-terminierten Polyethern, Alkylenoxiden, Aldehyden, Ketonen und Aldehyden in Kombination mit einer CH-aciden Verbindung oder mit einem Hydroxyaromaten.

Aliphatische Monocarbonsäuren sind vorzugsweise solche mit 1 bis 22 Kohlenstoffatomen, wie Ameisensäure, Essigsäure, Propionsäure, Buttersäure, Isobuttersäure, Valeriansäure, Isovaleriansäure, Capronsäure, Önanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Tuberculostearinsäure, Arachinsäure, Behensäure, Palmitoleinsäure, Ölsäure, Erucasäure, Sorbinsäure, Linolsäure, Linolensäure, Elaeostearinsäure, Arachidonsäure, Clupanodonsäure und Docosahexaensäure.

Geeignete Carbonsäurederivate sind alle Derivate, die geeignet sind, mit den Aminogruppen des Polymers aus Schritt (i) bzw. (ii) zu einer Amidbindung zu reagieren. Dazu gehören Halogenide, insbesondere Säurechloride, Anhydride und Ester.

Bei den Anhydriden kann es sich sowohl um die symmetrischen Anhydride als auch um asymmetrische Anhydride handeln. Letztere sind so gewählt, dass die "fremde" Säuregruppe leicht durch die Aminogruppen des Polymers aus Schritt (i) oder (ii) verdrängt werden kann. Geeignete Säurederivate, mit der die o. g. Carbonsäure geeignete gemischte Anhydride bilden kann, sind beispielsweise die Ester von Chlorameisensäure, z. B. Isopropylchlorformiat und Isobutylchlorformiat, oder von Chloressigsäure.

Geeignete Ester sind insbesondere die $C_1$-$C_4$-Alkylester, wie die Methyl-, Ethyl-, Propyl-, Isopropyl-, n-Butyl-, sec-Butyl-, Isobutyl- oder tert-Butylester. Geeignet sind aber auch Ester, die sich von $C_2$-$C_6$-Polyolen, wie Glykol, Glycerin, Trimethylolpropan, E-rythritol, Pentaerythritol und Sorbitol, ableiten, wobei der Glycerinester bevorzugt ist. Wenn Polyol-Ester eingesetzt werden, so können gemischte Ester, d. h. Ester mit verschiedenen Carbonsäureresten eingesetzt werden. Geeignet sind des Weiteren Aktivester, die man formal durch die Umsetzung der Säure mit einem Aktivester-bildenden Alkohol, wie p-Nitrophenol, N-Hydroxybenzotriazol (HOBt), N-Hydroxysuccinimid oder OPfp (Pentaflourphenol) erhält.

Vorzugsweise werden die Carbonsäuren selbst (d. h. nicht deren Derivate) eingesetzt.

Geeignete Polycarbonsäuren und deren Derivate sind beispielsweise $\alpha,\beta$-Dicarbonsäuren oder Derivate davon, wie Oxalsäure, Malonsäure, Bernsteinsäure, Maleinsäure, Fumarsäure, Glutarsäure, Adipinsäure, Pimelinsäure, Azelainsäure, Sebacinsäure, Sorbinsäure, Polyalkylen-substituierte Bernsteinsäure und Derivate davon. Polyalkylensubstituierte Bernsteinsäure ist vorzugsweise Polyisobutylen-substituierte Bernsteinsäure, die beispielsweise durch Umsetzung von Polyisobuten mit Maleinsäureanhydrid unter den Reaktionsbedingungen einer en-Reaktion erhältlich ist. Die Polyalkenyl-, speziell die Polyisobutenylreste weisen dabei ein zahlenmittleres Molekulargewicht $M_n$ von vorzugsweise 100 bis 5000, besonders bevorzugt 200 bis 1000 auf. Bezüglich geeigneter Säurederivate wird auf die vorstehenden Ausführungen verwiesen. Bevorzugt werden im Fall der Dicarbonsäure die Säureanhydride, bevorzugt die inneren Anhydride (d. h. Bernsteinsäureanhydrid, Maleinsäureanhydrid, Adipinsäureanhydrid, etc.), eingesetzt.

Geeignete aliphatische, cycloaliphatische oder aromatische gegebenenfalls verkappten Isocyanate sind beispielsweise Methylisocyanat, Ethylisocyanat, Propylisocyanat, Butylisocyanat, Pentylisocyanat, Hexylisocyanat, Cyclohexylisocyanat, Phenylisocyanat und dergleichen.

Geeignete aliphatische Monoamine sind vorzugsweise primär oder sekundär, besonders bevorzugt primär. Beispiele hierfür sind Methylamin, Ethylamin, Propylamin, Butylamin, Pentylamin, Hexylamin, Heptylamin, Octylamin, Nonylamin, Decylamin, Dodecylamin, [3-(2-Ethylhexyl)-propyl]-amin und dergleichen.

Geeignete aliphatische Polyamine sind beispielsweise Polyethylenimine, Polypropylenpolyamine, Polybutylenpolyamine, Polypentylenpolyamine und dergleichen.

Für weitere geeignete Modifizierungsmittel sei auf die EP 09179490.0 verwiesen.

Als Komponente C) können die erfindungsgemäßen Formmassen bis zu 70, vorzugsweise bis zu 50 Gew.-% weiterer Zusatzstoffe enthalten.

Als faser- oder teilchenförmige Füllstoffe C1) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen von 1 bis 50 Gew.-%, insbesondere 5 bis 45, vorzugsweise 10 bis 40 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

$$(X\text{-}(CH_2)_n)_k\text{-}Si\text{-}(O\text{-}C_mH_{2m+1})_{4-k}$$

in der die Substituenten folgende Bedeutung haben:

X $NH_2$-,

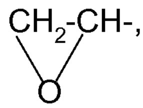, HO-,

n eine ganze Zahl von 2 bis 10, bevorzugt 3 bis 4
m eine ganze Zahl von 1 bis 5, bevorzugt 1 bis 2
k eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf E)) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 %. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente C2) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester oder Amide von Fettsäuren mit 10 bis 44 C-Atomen, vorzugsweise mit 12 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt

werden, wobei das Mischungsverhältnis beliebig ist.

Als Komponente C3) enthalten die erfindungsgemäßen Formmassen 0,05 bis 3, vorzugsweise 0,1 bis 1,5 und insbesondere 0,1 bis 1 Gew.-% eines Cu-Stabilisators, vorzugsweise eines Cu-(I)-Halogenids, insbesondere in Mischung mit einem Alkalihalogenid, vorzugsweise KJ, insbesondere im Verhältnis 1 : 4., oder eines sterisch gehinderten Phenols oder deren Mischungen.

Als Salze des einwertigen Kupfers kommen vorzugsweise Kupfer(I)-Acetat, Kupfer(I)-Chlorid, -Bromid und -Jodid in Frage. Diese sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Als sterisch gehinderte Phenole D3) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel

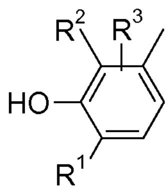

in Betracht, in der bedeuten:

$R^1$ und $R^2$ eine Alkylgruppe, eine substituierte Alkylgruppe oder eine substituierte Triazolgruppe, wobei die Reste $R^1$ und $R^2$ gleich oder verschieden sein können und $R^3$ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US- A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel

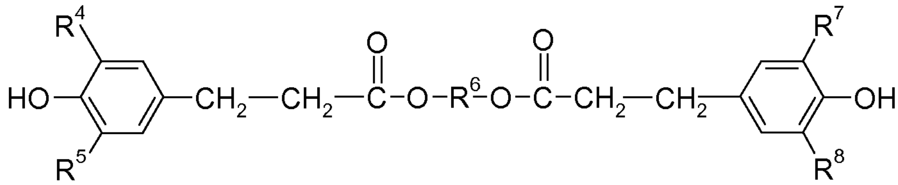

wobei $R^4$, $R^5$, $R^7$ und $R^8$ unabhängig voneinander $C_{-1}$-$C_8$-Alkylgruppen darstellen, die ihrerseits substituiert sein können (mindestens eine davon ist eine sterisch anspruchsvolle Gruppe) und $R^6$ einen zweiwertigen aliphatischen Rest mit 1 bis 10 C-Atomen bedeutet, der in der Hauptkette auch C-O-Bindungen aufweisen kann.

Bevorzugte Verbindungen, die diesen Formeln entsprechen, sind

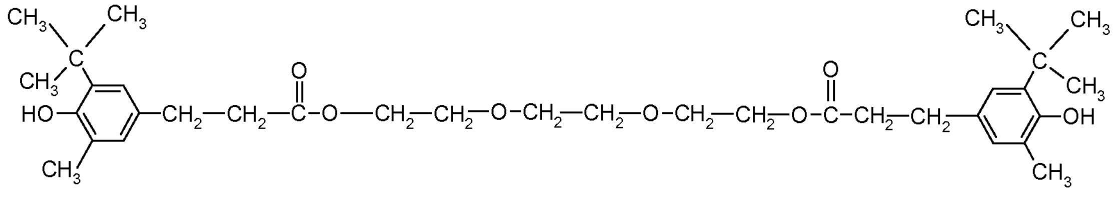

(Irganox® 245 der Firma BASF SE)

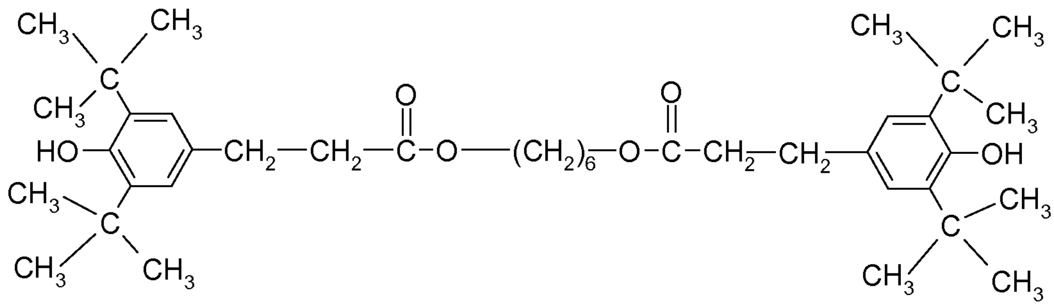

(Irganox® 259 der Firma BASF SE)

Beispielhaft genannt seien insgesamt als sterisch gehinderte Phenole:
2,2'-Methylen-bis-(4-methyl-6-tert.-butylphenol), 1,6-Hexandiol-bis[3-(3,5-di-tert.-butyl-4-hydroxyphenyl)-propionat], Pentaerythrityl-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyldimethylamin.

Als besonders wirksam erwiesen haben sich und daher vorzugsweise verwendet werden 2,2'-Methylen-bis-(4-methyl-6-tert.-butylphenol), 1,6-Hexandiol-bis-(3,5-di-tert.-butyl-4-hydroxyphenyl)-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma BASF SE, das besonders gut geeignet ist.

Die Antioxidantien C), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis C) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Als Komponente C4) können die erfindungsgemäßen Formmassen 0,05 bis 5, vorzugsweise 0,1 bis 2 und insbesondere 0,25 bis 1,5 Gew.-% eines Nigrosins enthalten.

Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit metall. Eisen und $FeCl_3$ (Name von lateinischem niger = schwarz).

Die Komponente C4) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Als Komponente C5) können die erfindungsgemäßen Formmassen 0,001 bis 20, vorzugsweise 0,05 bis 10 und insbesondere 0,1 bis 5 Gew.-% Eisenpulver mit einer Teilchengröße (auch als Partikelgröße bezeichnet) von maximal 10 $\mu$m ($d_{50}$-Wert) enthalten, welches vorzugsweise durch thermische Zersetzung von Eisenpentacarbonyl erhältlich ist.

Eisen kommt in mehreren allotropen Modifikationen vor:

1. $\alpha$-Fe (Ferrit) bildet raumzentrierte Würfelgitter, ist magnetisierbar, löst wenig Kohlenstoff, kommt in reinem Eisen bis 928°C vor. Bei 770°C (Curie-Temperatur) verliert es seine ferromagnetischen Eigenschaften und wird paramagnetisch; Eisen im Temperaturbereich von 770 bis 928°C wird auch als $\beta$-Fe bezeichnet. Bei gewöhnlicher Temperatur und einem Druck von mindestens 13000 MPa geht $\alpha$-Fe in sog. $\varepsilon$-Fe unter einer Vol.-Verminderung von ca. 0,20 $cm^3$/mol über, wobei sich die Dichte von 7,85 auf 9,1 (bei 20000 MPa) erhöht.

2. $\gamma$-Fe (Austenit) bildet flächenzentrierte Würfelgitter, ist unmagnetisch, löst viel Kohlenstoff und ist nur im Temperaturbereich von 928 bis 1398°C zu beobachten.

3. δ-Fe, raumzentriert, existiert zwischen 1398°C und dem Schmelzpunkt 1539°C.

Metallisches Eisen ist allgemein silberweiß, mit einer Dichte 7,874 (Schwermetall), Schmelzpunkt 1539°C, Siedepunkt 2880°C; spezifische Wärme (zwischen 18 und 100°C) etwa 0,5 $g^{-1}$ $K^{-1}$, Zugfestigkeit 220 bis 280 $N/mm^2$. Die Werte gelten für das chemisch reine Eisen.
Großtechnisch wird Eisen durch Verhüttung von Eisenerzen, Eisenschlacken, Kiesabbränden, Gichtstaub und durch Umschmelzen von Schrott und Legierung hergestellt.

Das erfindungsgemäße Eisenpulver wird durch thermische Zersetzung von Eisenpentacarbonyl hergestellt, vorzugsweise bei Temperaturen von 150°C bis 350°C. Die hierbei erhältlichen Partikel (Teilchen) haben eine vorzugsweise sphärische Form, d.h. kugelförmig oder nahezu kugelförmige Form (auch als sphärolitisch bezeichnet).

Bevorzugtes Eisenpulver weist eine Teilchengrößenverteilung (Partikelgrößenverteilung) wie nachstehend beschrieben auf, wobei die Teilchengrößenverteilung mittels Laserbeugung in einer hoch verdünnten wässrigen Suspension (z.B. mit Beckmann LS13320 Gerät) bestimmt wird. Optional kann die nachfolgend beschriebene Teilchengröße (und Verteilung) durch Mahlen oder/und Sieben eingestellt werden.

Hierbei bedeutet $d_{xx}$ = XX% des Gesamtvolumens der Partikels ist kleiner als der Wert.

| | |
|---|---|
| $d_{50}$-Werte: | max. 10 μm, vorzugsweise 1,6 bis 8, insbesondere 2,9 bis 7,5 μm, ganz besonders 3,4 bis 5,2 μm |
| $d_{10}$-Werte: | vorzugsweise 1 bis 5 μm, insbesondere 1 bis 3 und ganz besonders 1,4 bis 2,7 μm |
| $d_{90}$-Werte: | vorzugsweise 3 bis 35 μm, insbesondere 3 bis 12 und ganz besonders 6,4 bis 9,2 μm. |

Bevorzugt weist die Komponente B) einen Eisengehalt von 97 bis 99,8 g/100 g, vorzugsweise von 97,5 bis 99,6 g/100 g auf. Der Gehalt an weiteren Metallen beträgt vorzugsweise unter 1000 ppm, insbesondere unter 100 ppm und ganz besonders unter 10 ppm.

Der Fe-Gehalt wird üblicherweise durch Infrarotspektroskopie bestimmt.
Der C-Gehalt beträgt vorzugsweise 0,01 bis 1,2, vorzugsweise 0,05 bis 1,1 g/100 g und insbesondere 0,4 bis 1,1 g/100g. Dieser C-Gehalt entspricht bei den bevorzugten Eisenpulvern solchen, die im Anschluß an die thermische Zersetzung nicht mit Wasserstoff reduziert werden.

Der C-Gehalt wird üblicherweise durch Verbrennen der Probenmenge im Sauerstoffstrom und anschließender IR Detektion des entstandenen $CO_2$-Gases (mittels Leco CS230 oder CS-mat 6250 der Firma Juwe) in Anlehnung an ASTM E1019 bestimmt.

Der Stickstoffgehalt beträgt vorzugsweise max. 1,5 g/100 g, bevorzugt von 0,01 bis 1,2 g/100g.
Der Sauerstoffgehalt beträgt vorzugsweise max. 1,3 g/100g, bevorzugt 0,3 bis 0,65 g/100g.
Die Bestimmungen von N und O erfolgt durch Erhitzen der Probe im Graphitofen auf ca. 2100°C. Der hierbei in der Probe erhaltene Sauerstoff wird zu CO umgesetzt und über einen IR-Detektor gemessen. Der unter den Reaktionsbedingungen freigesetzte N aus den N-haltigen Verbindungen wird mit dem Trägergas ausgetragen und mittels WLD (Thermal Conductivity Detector/TC) detektiert und erfasst (beide Methoden in Anlehnung an ASTM E1019).

Die Klopfdichte (tap density) beträgt vorzugsweise 2,5 bis 5 $g/cm^3$, insbesondere 2,7 bis 4,4 $g/cm^3$. Darunter wird im Allgemeinen die Dichte verstanden, wenn das Pulver in den Container z.B. gefüllt und geschüttelt wird, um eine Kompaktierung zu erzielen. Weiterhin bevorzugte Eisenpulver können mit Eisenphosphat, Eisenphosphit oder $SiO_2$ oberflächlich beschichtet sein.

Die BET-Oberfläche gemäß DIN ISO 9277 beträgt vorzugsweise von 0,1 bis 10 $m^2/g$, insbesondere 0,1 bis 5 $m^2/g$, bevorzugt 0,2 bis 1 $m^2/g$ und insbesondere 0,4 bis 1 $m^2/g$.

Um eine besonders gute Verteilung der Eisenpartikel zu erzielen, kann man einen Batch mit einem Polymeren einsetzen. Polymere wie Polyolefine, Polyester oder Polyamide sind hierfür geeignet, wobei vorzugsweise das Batchpolymer gleich der Komponente A) ist. Der Masseanteil des Eisens im Polymeren beträgt in der Regel 15 bis 80, vorzugsweise 20 bis 40 Masse-%.

Weitere übliche Zusatzstoffe C) sind beispielsweise in Mengen bis zu 25, vorzugsweise bis zu 20 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im Folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

$$R^1C(COOR^2)=C(COOR^3)R^4 \qquad (I)$$

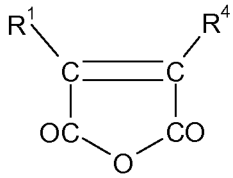

(II)

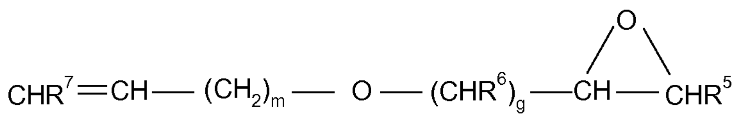

(III)

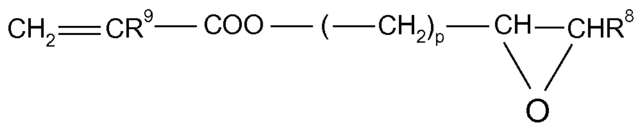

(IV)

wobei $R^1$ bis $R^9$ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste $R^1$ bis $R^9$ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säure-anhydridgruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| 0,1 bis 40, | insbesondere 0,3 bis 20 Gew.-% Glycidylacrylat und/oder Glycidylmethacrylat, (Meth)acrylsäure und/ oder Maleinsäureanhydrid, und |

(fortgesetzt)

1 bis 45, insbesondere 5 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

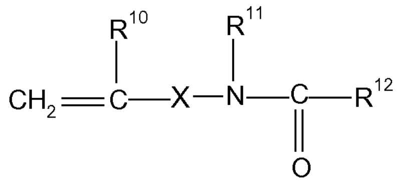

eingeführt werden können,
wobei die Substituenten folgende Bedeutung haben können:

- $R^{10}$ Wasserstoff oder eine $C_1$- bis $C_4$-Alkylgruppe,
- $R^{11}$ Wasserstoff, eine $C_1$- bis $C_8$-Alkylgruppe oder eine Arylgruppe, insbesondere Phenyl,
- $R^{12}$ Wasserstoff, eine $C_1$- bis $C_{10}$-Alkyl-, eine $C_6$- bis $C_{12}$-Arylgruppe oder $-OR^{13}$
- $R^{13}$ eine $C_1$- bis $C_8$-Alkyl- oder $C_6$- bis $C_{12}$-Arylgruppe, die gegebenenfalls mit O- oder N-haltigen Gruppen substituiert sein können,
- X eine chemische Bindung, eine $C_1$- bis $C_{10}$-Alkylen- oder $C_6$-$C_{12}$-Arylengruppe oder

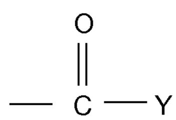

Y O-Z oder NH-Z und

Z eine $C_1$- bis $C_{10}$-Alkylen- oder $C_6$- bis $C_{12}$-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethyl-amino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als Komponente C) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) sowie gegebenenfalls C) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine gute Verarbeitbarkeit bei gleichzeitig guter Mechanik, sowie eine deutlich verbesserte Bindenahtfestigkeit und Oberfläche sowie thermische Stabilität aus.

Diese eignen sich zur Herstellung von Fasern, Folien und Formkörpern jeglicher Art. Nachfolgend sind einige Beispiele genannt: Zylinderkopfhauben, Motorradabdeckungen, Ansaugrohre, Ladeluftkühlerkappen, Steckverbinder, Zahnräder, Lüfterräder, Kühlwasserkästen.

Im E/E-Bereich können mit fließverbesserten Polyamiden Stecker, Steckerteile, Steckverbinder, Membranschalter, Leiterplattenbaugruppen, mikroelektronische Bauteile, Spulen, I/0 Steckverbinder, Stecker für Leiterplatten (PCB), Stecker für flexible Leiterplatten (FPC), Stecker für flexible integrierte Schaltkreise (FFC), High-Speed Steckverbindungen, Klemmleisten, Anschlussstecker, Gerätestecker, Kabelbaumkomponenten, Schaltungsträger, Schaltungsträgerkomponenten, dreidimensional spritzgegossene Schaltungsträger, elektrische Verbindungselemente, mechatronische Komponenten hergestellt werden.

Im Auto-Innenraum ist eine Verwendung für Armaturentafeln, Lenkstockschalter, Sitzteile, Kopfstützen, Mittelkonsolen, Getriebe-Komponenten und Türmodule, im Auto-Außenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre (insbesondere Ansaugkrümmer), Scheibenwischer sowie Karosserieaußenteile möglich.

Für den Küchen- und Haushaltsbereich ist der Einsatz fließverbesserter Polyamide zur Herstellung von Komponenten für Küchengeräte, wie z.B. Friteusen, Bügeleisen, Knöpfe, sowie Anwendungen im Garten-Freizeitbereich, z.B. Komponenten für Bewässerungssysteme oder Gartengeräte und Türgriffe möglich.

Beispiele

I. Einsatz verschiedener Melamin Polymerer in Polyamid

Es wurden folgende Komponenten eingesetzt:

Komponente A

Polyamid 66 mit einer Viskositätszahl VZ von 148 ml/g, gemessen als 0,5 gew.-%ige Lösung in 96 gew.-%iger Schwefelsäure bei 25°C nach ISO 307. (Es wurde Ultramid® A27der BASF SE verwendet).

Komponenten B

Die Aminzahl wurde gemäß DIN 53176 bestimmt. Die Viskosität wurde unter Verwendung eines Rheometers (Physica MCR51 von Anton Paar GmbH, Graz, Österreich) bestimmt. Zur Bestimmung der Löslichkeit wurden das Produkt und das Lösungsmittel in einem Gewichtsverhältnis von 10:90 gemischt und mit einer Heizpistole erhitzt. Das Produkt gilt als löslich, wenn es beim Abkühlen nicht präzipitiert.

B/1 Herstellung eines hochverzweigten Melamin-Tetraethylenpentamin-Polymeren

1855 g ≙ 9,8 mol Tetraethylenpentamin wurden vorgelegt, mit 121,9 g ≙ 2,28 mol Ammoniumchlorid als Katalysator versetzt, und ein leichter Stickstoffstrom wurde angelegt. 441 g ≙ 3,5 mol Melamin wurde in 4 Portionen zugegeben. Dabei wurde nach jeder Melaminzugabe das Reaktionsgemisch auf 200 °C erhitzt und gerührt, bis sich das Melamin aufgelöst hatte. Nach dem Auflösen wurde das Gemisch erst auf 100°C abgekühlt, bevor die nächste Portion zugegeben wurde. Nach der Zugabe der letzten Portion wurde das Reaktionsgemisch so lange bei 200°C gerührt, bis die Viskosität nicht weiter anstieg (ca. 20 000 mPas bei 75°C). Nach dem Abkühlen wurde der Katalysator mit 50%iger Natronlauge neutralisiert und dabei gebildete Natriumhydroxid bei 90°C über eine Drucknutsche abfiltriert. Man erhielt ein gelbes Polymer mit folgenden Eigenschaften:

Viskosität (75°C) $\eta$ = 3800 mPas
Löslichkeit: HFIP (= Hexafluorisopropanol), Wasser
Aminzahl: 677,7 mg KOH/g
GPC:

$M_w$ = 13400 g/mol
$M_n$ = 5100 g/mol

B/2 Herstellung eines funktionalisierten, hochverzweigten Melaminpolymeren

2,8 mol Pentaethylenhexamin wurden vorgelegt, mit 0,65 mol Ammoniumchlorid als Katalysator versetzt, und ein leichter Stickstoffstrom wurde angelegt. 1 mol Melamin wurde in 4 Portionen von 0,25 mol zugegeben. Dabei wurde nach jeder Melaminzugabe das Reaktionsgemisch auf 200°C erhitzt und gerührt, bis sich das Melamin aufgelöst hatte. Nach dem Auflösen wurde das Gemisch erst auf 100°C abgekühlt, bevor die nächste Portion zugegeben wurde. Nach der Zugabe der letzten Portion wurde das Reaktionsgemisch so lange bei 200°C gerührt, bis die Viskosität nicht weiter anstieg (ca. 20 000 mPas bei 75°C). Nach dem Abkühlen wurde der Katalysator mit 50 %iger Natronlauge neutralisiert und dabei gebildete Natriumhydroxid bei 90°C über eine Drucknutsche abfiltriert. Man erhielt ein Polymer mit folgenden Eigenschaften:

Viskosität (75°C) $\eta$ = 3250 mPas
GPC (HFIP) $M_n$ = 6300 $M_w$ = 24400
Löslichkeit: HFIP (= Hexafluorisopropanol), Wasser
Aminzahl: 665 mg KOH/g

Das so erhaltene Polymer wurde in einem Kolben vorgelegt und mit 0,2 mol Ölsäure versetzt. Das Gemisch wurde auf 120 erhitzt und das entstehende Reaktionswasser destillativ entfernt. Die Temperatur wurde dabei schrittweise auf 180°C erhöht. Nachdem kein weiteres Wasser mehr gebildet wurde, wurde noch eine Stunde bei 180°C gerührt. Man erhielt ein dunkelgelbes, honigartig fließendes Polymer mit folgenden Eigenschaften:

Viskosität (75°C) $\eta$ = 1500 mPas
Löslichkeit: HFIP (= Hexafluorisopropanol), Wasser

Vor der Konfektionierung wurden die Komponenten B/1 und B/2 im Vakuum bei 80°C für 24 Std. getrocknet.

Komponente C/1

Glasfasern

Komponente C/2

Calciumstearat

Komponente C/3

CuJ/KJ im Verhältnis 1 : 4 (20 %-iger Batch in PA6)

Komponente C/4

40 %iger PA6 Masterbach mit Nigrosin

Die Formmassen wurden auf einer ZSK 30 bei einem Durchsatz von 25 kg/h und ca. 260°C flachem Temperaturprofil hergestellt.

Es wurden folgende Messungen durchgeführt:
Zugversuch nach ISO 527, Mechanikkennwerte vor und nach Wärmelagerung bei 200 bzw. 220°C im Umluftofen

VZ: c = 5 g/l in 96 %-iger Schwefelsäure, nach ISO 307

Der Fülldruck wurde bestimmt als Druck am Umschaltpunkt beim Spritzgießen von Zugstäben gemäß ISO 527.

Die Zusammensetzungen der Formmassen und die Ergebnisse der Messungen sind den Tabellen zu entnehmen.

Zusammensetzungen:

| Bsp. | A (%) | C/1 (%) | C/2 (%) | C/3 (%) | C/4 (%) | B1 (%) | B2 (%) | Fülldruck (bar) | VZ (ml/g) |
|---|---|---|---|---|---|---|---|---|---|
| 1V | 67.45 | 30 | 0.35 | 0.3 | 1.9 | 0 | 0 | 327 | 153 |
| 1 | 66.95 | 30 | 0.35 | 0.3 | 1.9 | 0.5 | 0 | 249 | 148 |
| 2 | 66.95 | 30 | 0.35 | 0.3 | 1.9 | 0 | 0.5 | 259 | 140 |

Mechanische Eigenschaften nach Wärmelagerung bei 220°C

| Beispiel | E-Modul [MPa] | | | |
|---|---|---|---|---|
| | 0h | 250h | 500h | 750h |
| 1V | 9830 | 10580 | 10200 | 8400 |
| 1 | 9950 | 10500 | 10430 | 10150 |
| 2 | 9890 | 10660 | 10440 | 9930 |

| Beispiel | (Bruchspannung) [MPa] | | | |
|---|---|---|---|---|
| | 0h | 250h | 500h | 750h |
| 1V | 187 | 158 | 121 | 71 |
| 1 | 192 | 182 | 154 | 128 |

(fortgesetzt)

| Beispiel | (Bruchspannung) [MPa] | | | |
|---|---|---|---|---|
| | 0h | 250h | 500h | 750h |
| 2 | 191 | 177 | 147 | 113 |

| Beispiel | (Bruchdehnung) [%] | | | |
|---|---|---|---|---|
| | 0h | 250h | 500h | 750h |
| 1V | 3.4 | 1.8 | 1.4 | 1.0 |
| 1 | 3.0 | 2.3 | 1.8 | 1.5 |
| 2 | 2.9 | 2.2 | 1.7 | 1.4 |

Mechanische Eigenschaften nach Wärmelagerung bei 200°C

| Beispiel | E-Modul [MPa] | | | | |
|---|---|---|---|---|---|
| | 0h | 250h | 500h | 750h | 1000h |
| 1V | 9830 | 10310 | 10420 | 10330 | 10320 |
| 1 | 9950 | 10520 | 10460 | 10230 | 10200 |

| Beispiel | (Bruchspannung) [MPa] | | | | |
|---|---|---|---|---|---|
| | 0h | 250h | 500h | 750h | 1000h |
| 1V | 187 | 172 | 146 | 141 | 129 |
| 1 | 192 | 185 | 166 | 160 | 140 |

| Beispiel | (Bruchdehnung) [%] | | | | |
|---|---|---|---|---|---|
| | 0h | 250h | 500h | 750h | 1000h |
| 1V | 3.4 | 2.2 | 1.7 | 1.6 | 1.5 |
| 1 | 3.0 | 2.3 | 1.9 | 1.9 | 1.6 |

II. Kombination von Melamin-Polymeren mit Eisenpulver

Die Komponenten A/1, A/4, B1, C1 bis C4 entsprechen I.

Als Komponente C5 wurde eingesetzt:
Eisenpulver hat CAS-Nr. 7439-89-6. Bestimmung des Fe, C, N und O-Gehaltes siehe Beschreibung S. 32-34.

| | | | |
|---|---|---|---|
| Fe | g/100 g | min. 97.7 | IR Detektion |
| C | g/100 g | max. 1.0 | IRS |
| N | g/100 g | max. 1.0 | TCD |
| O | g/100 g | max. 0.6 | IRS |

Teilchengrößenverteilung: (Laserbeugung mit Beckmann LS13320)

| | |
|---|---|
| $d_{10}$ | 1,4 bis 2,7 μm |
| $d_{50}$ | 2,9 bis 4,2 μm |
| $d_{90}$ | 6,4 bis 9,2 μm |
| BET-Oberfläche 0,44 $m^2/g$ (DIN ISO 9277) | |

Die Herstellung und die Meßmethoden entsprachen I.

Die Zusammensetzung der Formmassen war:

| | |
|---|---|
| 54,75 | Gew.-% A/1 |
| 10 | Gew.-% A/4 |
| 0,5 | Gew.-% B/1 |
| 30 | Gew.-% C/1 |
| 0,35 | Gew.-% C/2 |
| 1,5 | Gew.-% C/3 |
| 1,9 | Gew.-% C/4 |
| 1 | Gew.-% C/5 |

Mechanische Eigenschaften nach Wärmelagerung bei 200°C

| Bsp. | E-modul (MPa) | | | | | | |
|---|---|---|---|---|---|---|---|
| | 0 h | 500 h | 1000 h | 1500 h | 2000 h | 2500 h | 3000 h |
| 1 | 9600 | 10100 | 10320 | 10100 | 10500 | 10100 | 9400 |

| Bsp. | Bruchspannung [MPa] | | | | | | |
|---|---|---|---|---|---|---|---|
| | 0 h | 500 h | 1000 h | 1500 h | 2000 h | 2500 h | 3000 h |
| 1 | 181 | 185 | 173 | 167 | 154 | 141 | 122 |

| Bsp. | Bruchdehung [%] | | | | | | |
|---|---|---|---|---|---|---|---|
| | 0 h | 500 h | 1000 h | 1500 h | 2000 h | 2500 h | 3000 h |
| 1 | 3.3 | 2.7 | 2.4 | 2.4 | 2.1 | 1.8 | 1.6 |

Mechanische Eigenschaften nach Wärmelagerung bei 220°C

| Bsp. | E-modul (MPa) | | | | | | |
|---|---|---|---|---|---|---|---|
| | 0 h | 500 h | 1000 h | 1500 h | 2000 h | 2500 h | 3000 h |
| 1 | 9600 | 10350 | 10200 | 10400 | 10500 | 10400 | 10600 |

| Bsp. | Bruchspannung [MPa] | | | | | | |
|---|---|---|---|---|---|---|---|
| | 0 h | 500 h | 1000 h | 1500 h | 2000 h | 2500 h | 3000 h |
| 1 | 181 | 151 | 160 | 165 | 175 | 177 | 175 |

| Bsp. | Bruchdehnung [%] | | | | | | |
|---|---|---|---|---|---|---|---|
| | 0 h | 500 h | 1000 h | 1500 h | 2000 h | 2500 h | 3000 h |
| 1 | 3.3 | 1.8 | 2.0 | 2.6 | 2.8 | 2.7 | 2.8 |

**Patentansprüche**

**1.** Thermoplastische Formmassen, enthaltend

A) 10 bis 98 Gew.-% eines thermoplastischen Polyamids,
B) 0,01 bis 20 Gew.-% eines hochverzweigten Melamin-Polymeren oder Melamin-Harnstoff-Polymeren oder deren Mischungen mit einem Verzweigungsgrad von 10 bis 99,9 % und einer Aminzahl (DIN53176) von 100 bis 900 mg KOH/g,
C) bis 70 Gew.-% weitere Zusatzstoffe,

C3) 0,05 bis 3 Gew.-% eines kupferhaltigen Stabilisators als Teil der Komponente C),

wobei die Summe der Gewichtsprozente der Komponenten A) bis C) 100 % ergibt.

**2.** Thermoplastische Formmassen nach Anspruch 1, enthaltend 1 bis 50 Gew.-% eines faser- oder teilchenförmigen Zusatzstoffes C1 als Teil der Komponente C).

**3.** Thermoplastische Formmassen nach den Ansprüchen 1 oder 2, in denen die Komponente B) einen Verzweigungsgrad von 20 bis 99 % aufweist.

**4.** Thermoplastische Formmassen nach den Ansprüchen 1 bis 3, in denen die Komponente B) erhältlich ist durch die Umsetzung von

(i) Harnstoff und/oder wenigstens einem Harnstoffderivat;
(ii) Melamin; und
(iii) wenigstens einem Amin, wobei das wenigstens eine Amin

(iii.1) 20 bis 100 Mol-%, bezogen auf die Gesamtmenge der Komponenten (iii.1), (iii.2) und (iii.3), wenigstens eines Diamins oder Polyamins mit zwei primären Aminogruppen,
(iii.2) 0 bis 50 Mol-%, bezogen auf die Gesamtmenge der Komponenten (iii.1), (iii.2) und (iii.3), wenigstens eines Polyamins mit wenigstens drei primären Aminogruppen; und
(iii.3) 0 bis 80 Mol-%, bezogen auf die Gesamtmenge der Komponenten (iii.1), (iii.2) und (iii.3), wenigstens eines Amins mit einer primären Aminogruppe umfasst und

(iv) gegebenenfalls wenigstens einem Melamin-Derivat, das ausgewählt ist unter Benzuguanamin, substituierten Melaminen und Melamin-Kondensaten.

**5.** Thermoplastische Formmassen nach den Ansprüchen 1 bis 4, in denen die Komponente B) ein zahlenmittleres Molekulargewicht $M_n$ von 1000 bis 40000 g/mol aufweist (GPC).

**6.** Thermoplastische Formmassen nach Anspruch 5, in denen die Komponente B) ein gewichtsmittleres Molekulargewicht $M_w$ von 1500 bis 150000 g/mol aufweist.

**7.** Thermoplastische Formmassen nach den Ansprüchen 1 bis 6, enthaltend 0,001 bis 20 Gew.-% Eisenpulver mit einer Teilchengröße von maximal 10 $\mu$m ($d_{50}$-Wert) (Komponente C5) als Teil der Komponente C.

**8.** Verwendung der thermoplastischen Formmassen gemäß den Ansprüchen 1 bis 7 zur Herstellung von Fasern, Folien und Formkörpern jeglicher Art.

**9.** Fasern, Folien und Formkörper, erhältlich aus den thermoplastischen Formmassen gemäß den Ansprüchen 1 bis 8.

**Claims**

1. A thermoplastic molding composition, comprising

A) from 10 to 98% by weight of a thermoplastic polyamide,
B) from 0.01 to 20% by weight of a highly branched melamine polymer or melamine-urea polymer, or a mixture of these, having a degree of branching of from 10 to 99.9% and an amine number (DIN 53176) of from 100 to 900 mg KOH/g,
C) up to 70% by weight of further additives,

C3) from 0.05 to 3% by weight of a copper-containing stabilizer as part of component C),

where the total of the percentages by weight of components A) to C) is 100%.

2. The thermoplastic molding composition according to claim 1, comprising from 1 to 50% by weight of a fibrous or particulate additive C1 as part of component C).

3. The thermoplastic molding composition according to claim 1 or 2, in which the degree of branching of component B) is from 20 to 99%.

4. The thermoplastic molding composition according to claims 1 to 3, in which component B) is obtainable via reaction of

(i) urea and/or at least one urea derivative;
(ii) melamine; and
(iii) at least one amine, where the at least one amine comprises

(iii.1) from 20 to 100 mol%, based on the total amount of components (iii.1), (iii.2), and (iii.3), of at least one diamine or polyamine having two primary amino groups,
(iii.2) from 0 to 50 mol%, based on the total amount of components (iii.1), (iii.2), and (iii.3), of at least one polyamine having at least three primary amino groups; and
(iii.3) from 0 to 80 mol%, based on the total amount of components (iii.1), (iii.2), and (iii.3), of at least one amine having one primary amino group and

(iv) optionally at least one melamine derivative, selected from benzoguanamine, substituted melamines, and melamine condensates.

5. The thermoplastic molding composition according to claims 1 to 4, in which the number-average molar mass $M_n$ of component B) is from 1000 to 40 000 g/mol (GPC) .

6. The thermoplastic molding composition according to claim 5, in which the weight-average molar mass $M_w$ of component B) is from 1500 to 150 000 g/mol.

7. The thermoplastic molding composition according to claims 1 to 6, comprising from 0.001 to 20% by weight of iron powder with a particle size of at most 10 $\mu$m ($d_{50}$ value) (component C5) as part of component C.

8. The use of the thermoplastic molding compositions according to claims 1 to 7 for producing fibers, foils, and moldings of any type.

9. A fiber, foil, or molding, obtainable from the thermoplastic molding compositions according to claims 1 to 8.

**Revendications**

1. Matériaux de moulage thermoplastiques, contenant :

A) 10 à 98 % en poids d'un polyamide thermoplastique,
B) 0,01 à 20 % en poids d'un polymère de mélamine ou d'un polymère de mélamine-urée hautement ramifié ou leurs mélanges ayant un degré de ramification de 10 à 99,9 % et un indice d'amine (DIN 53176) de 100 à

900 mg KOH/g,
C) jusqu'à 70 % en poids d'autres additifs,

C3) 0,05 à 3 % en poids d'un stabilisateur contenant du cuivre en tant que partie du composant C), la somme des pourcentages en poids des composants A) à C) étant de 100 %.

**2.** Matériaux de moulage thermoplastiques selon la revendication 1, contenant 1 à 50 % en poids d'un additif fibreux ou particulaire C1 en tant que partie du composant C).

**3.** Matériaux de moulage thermoplastiques selon les revendications 1 ou 2, dans lesquels le composant B) présente un degré de ramification de 20 à 99 %.

**4.** Matériaux de moulage thermoplastiques selon les revendications 1 à 3, dans lesquels le composant B) peut être obtenu par la mise en réaction de

(i) de l'urée et/ou au moins un dérivé d'urée ;
(ii) de la mélamine ; et
(iii) au moins une amine, ladite au moins une amine comprenant

(iii.1) 20 à 100 % en moles, par rapport à la quantité totale des composants (iii.1), (iii.2) et (iii.3), d'au moins une diamine ou polyamine contenant deux groupes amino primaires,
(iii.2) 0 à 50 % en moles, par rapport à la quantité totale des composants (iii.1), (iii.2) et (iii.3), d'au moins une polyamine contenant au moins trois groupes amino primaires ; et
(iii.3) 0 à 80 % en moles, par rapport à la quantité totale des composants (iii.1), (iii.2) et (iii.3), d'au moins une amine contenant un groupe amino primaire, et

(iv) éventuellement au moins un dérivé de mélamine, qui est choisi parmi la benzoguanamine, les mélamines substituées et les condensats de mélamine.

**5.** Matériaux de moulage thermoplastique selon les revendications 1 à 4, dans lesquels le composant B) présente un poids moléculaire moyen en nombre $M_n$ de 1 000 à 40 000 g/mol (CPG).

**6.** Matériaux de moulage thermoplastiques selon la revendication 5, dans lesquels le composant B) présente un poids moléculaire moyen en poids $M_w$ de 1 500 à 150 000 g/mol.

**7.** Matériaux de moulage thermoplastiques selon les revendications 1 à 6, contenant 0,001 à 20 % en poids de poudre de fer ayant une taille de particule d'au plus 10 $\mu$m (valeur $d_{50}$) (composant C5) en tant que partie du composant C.

**8.** Utilisation des matériaux de moulage thermoplastiques selon les revendications 1 à 7 pour la fabrication de fibres, de films et de corps moulés de tout type.

**9.** Fibres, films et corps moulés, pouvant être obtenus à partir des matériaux de moulage thermoplastiques selon les revendications 1 à 8.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2006074912 A
- WO 2005007727 A
- EP 1846506 A
- WO 200017171 A
- WO 2009080787 A
- WO 200927186 A
- WO 2008148766 A
- EP 240867 A
- EP 1479722 A
- DE 10056398 A
- US 2071250 A
- US 2071251 A
- US 2130523 A
- US 2130948 A
- US 2241322 A
- US 2312966 A
- US 2512606 A
- US 3393210 A
- DE 10313681 A
- EP 1198491 A
- EP 922065 A
- EP 38094 A
- EP 38582 A
- EP 39524 A
- EP 299444 A
- EP 1994075 A
- EP 129195 A
- EP 129196 A
- EP 09179490 A
- DE 2702661 A
- US 4360617 A
- EP 208187 A
- EP 50265 A
- US 4148846 A
- DE 3725576 A
- EP 235690 A
- DE 3800603 A
- EP 319290 A


### In der Beschreibung aufgeführte Nicht-Patentliteratur


- **H. FREY et al.** *Acta. Polym.,* 1997, vol. 48, 30
- Nigrosin. elektronischen Lexikon Römpp Online. Thieme-Verlag, 2006
- **C.B. BUCKNALL.** Toughened Plastics. Applied Science Publishers, 1977